# EUROPEAN PATENT APPLICATION

(11) **EP 4 582 982 A1**
(43) Date of publication of application: **09.07.2025**
(21) Application number: 23859815.5
(22) Date of filing: 27.06.2023
(51) Int. Cl.: G06F 21/10, G06F 21/44, G06F 21/60, G06F 21/64

(54) **TERMINAL DEVICE, VIDEO RECORDING MANAGEMENT SYSTEM, MANAGEMENT SERVER DEVICE, CONTROL METHOD, AND PROGRAM**

(30) Priority: 31.08.2022 JP 2022138693
(71) Applicant: Panasonic Intellectual Property Management Co., Ltd., Kadoma-shi, Osaka 571-0057 (JP)
(72) Inventor: NAKATANI, Tokuo, Kadoma-shi, Osaka 571-0057 (JP); FUKUDA, Hideki, Kadoma-shi, Osaka 571-0057 (JP); YAMAGUCHI, Takashi, Kadoma-shi, Osaka 571-0057 (JP); NISHIKAWA, Yutaka, Kadoma-shi, Osaka 571-0057 (JP)
(74) Representative: Novagraaf International SA
(86) International application number: PCT/JP2023/023713
(87) International publication number: WO 2024/048045

(57) **Abstract**

A secondary device (30) which is a terminal device includes a circuit and a memory connected to the circuit. Using the memory, the circuit: performs device authentication with a primary device (10) which is a video recording device; obtains a content key (Kc) that is encrypted from the primary device (10); decrypts the content key (Kc) using a common key (Kp) shared between the primary device (10) and the secondary device (30); reads a content that is encrypted and recorded on a cloud server (20) by the primary device (10), by accessing the cloud server (20) without passing through the primary device (10); and decrypts the content read using the content key (Kc) to play back the content.

## Description

### [Technical Field]

The present disclosure relates to a technique used in a system that records and plays back distributed content such as a show.

### [Background Art]

Conventionally, there has been proposed a content transfer system including a content transmitting device and a content receiving device that safely transmit and receive content (see, for example, Patent Literature (PTL) 1). In this content transfer system, the content transmitting device performs mutual authentication and transferring of shared keys with the content receiving device, encrypts the content using an encryption key generated from the shared key, and transmits the content to the content receiving device. At this time, the content transmitting device switches the shared key to be transferred according to the security strength that the content receiving device has.

Furthermore, there has been proposed a content transfer system that transmits, within an appropriate range of use, contents accumulated in a household, to a terminal via an external network (see, for example, PTL 2). In this content transfer system, the server permits the transfer of content that is shorter than a playback enabled time in response to the terminal requesting for content by remote access, and decreases the playback enabled time by as much as the playback time of the content transferred by remote access.

### [Citation List]

### [Patent Literature]

[PTL 1] Japanese Patent No. 6390618
[PTL 2] Japanese Patent No. 6187139

### [Summary of Invention]

### [Technical Problem]

However, when content is recorded on a generally used cloud server, the content transfer systems in PTL 1 and 2 have a problem in that it is difficult to appropriately suppress unauthorized acts regarding the content.

In view of this, the present disclosure provides a terminal device, and the like, capable of appropriately suppressing unauthorized acts regarding content.

### [Solution to Problem]

A terminal device according to an aspect of the present disclosure is a terminal device to be used in a video recording and playback system, the video recording and playback system including: a cloud server device; a video recording device that receives and encrypts a content that is distributed, and records the content encrypted, on the cloud server device via Internet; and the terminal device that plays back the content, the terminal device including: a circuit; and a memory connected to the circuit, wherein using the memory, the circuit: performs device authentication with the video recording device; obtains a content key that is encrypted from the video recording device; decrypts the content key using a common key shared between the video recording device and the terminal device; reads the content that is encrypted and recorded on the cloud server device, by accessing the cloud server device without passing through the video recording device; and decrypts the content read using the content key to play back the content.

It is to be noted that these general or specific aspects may be implemented as a device, a method, an integrated circuit, a computer program, or a computer-readable recording medium such as a CD-ROM, or may be implemented as any combination of a device, a method, an integrated circuit, a computer program, and a computer-readable recording medium. Moreover, the recording medium may be a non-transitory recording medium.

### [Advantageous Effects of Invention]

A terminal device according to the present disclosure can appropriately suppress unauthorized acts regarding content.

It should be noted that further advantages and effects of one aspect of the present disclosure will become apparent from the written description and drawings. These advantages and/or effects are provided by several elements described in the embodiments as well as the written description and drawings, but do not necessarily require all of the elements.

### [Brief Description of Drawings]

[FIG. 1]

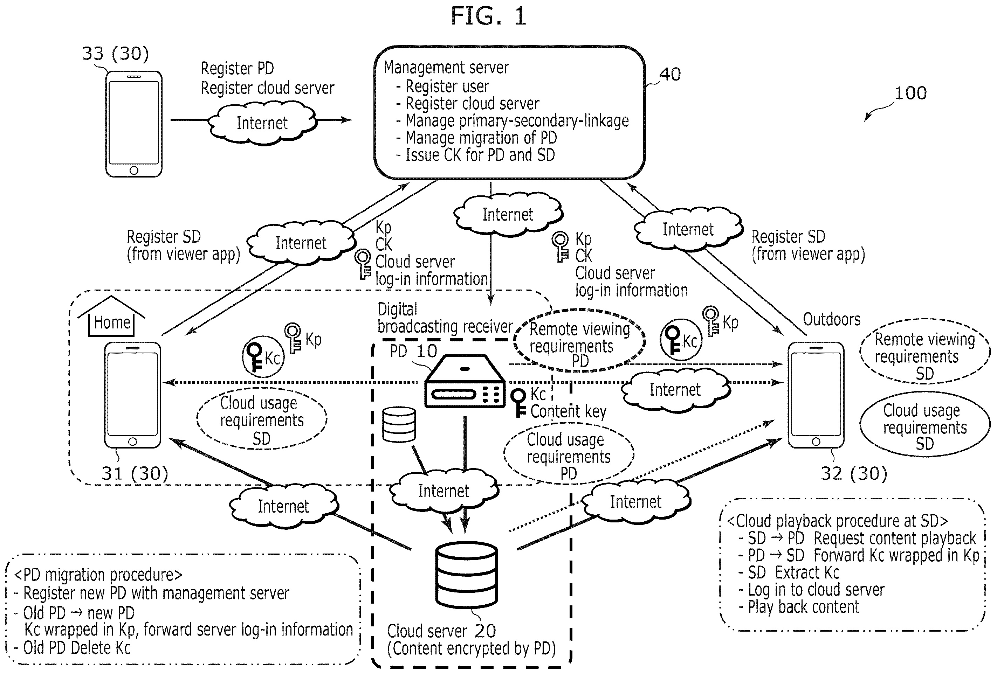

   FIG. 1 is a diagram illustrating a configuration example of a video recording and playback system in an embodiment.
[FIG. 2]

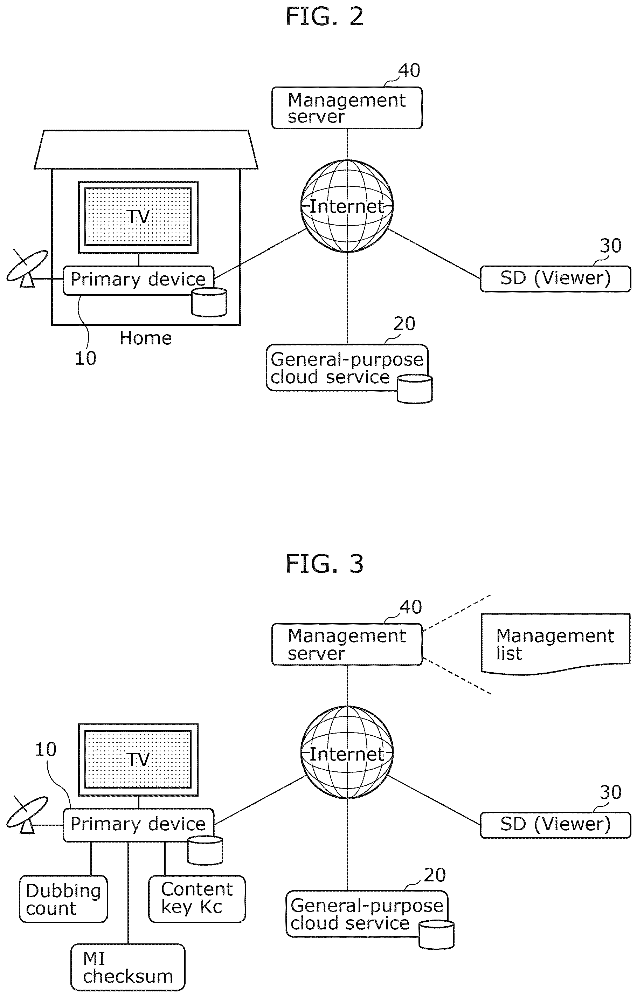

   FIG. 2 is a diagram simply illustrating the configuration of the video recording and playback system in the embodiment.
[FIG. 3]
   FIG. 3 is a diagram illustrating an example of items of information included in a primary device (PD) and a management server of the video recording and playback system in the embodiment.
[FIG. 4]

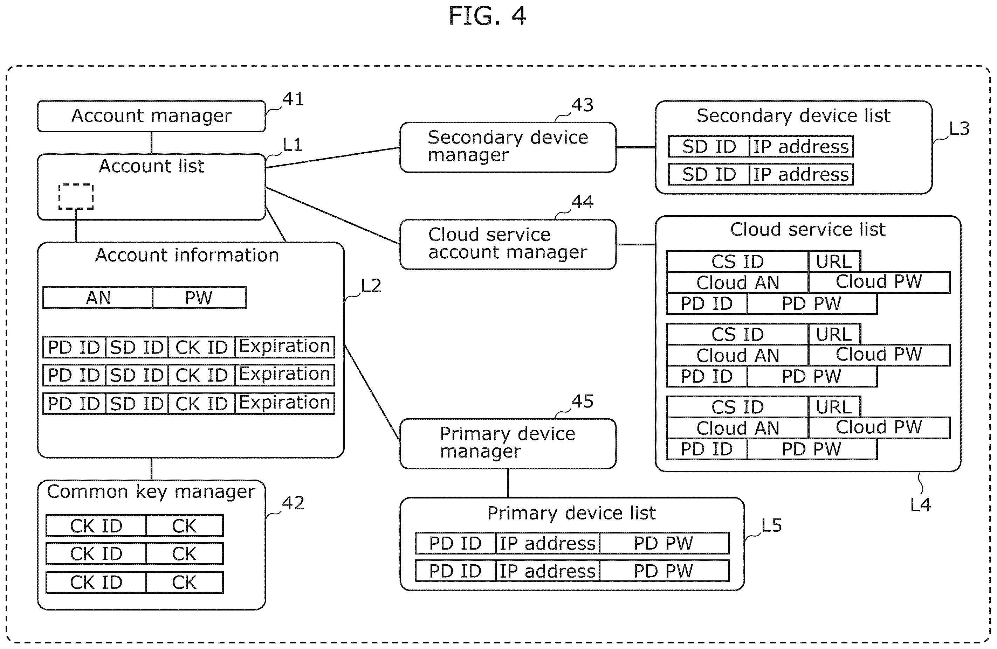

   FIG. 4 is a diagram illustrating an example of the configuration of the management server and information included in the management server in the embodiment.
[FIG. 5]

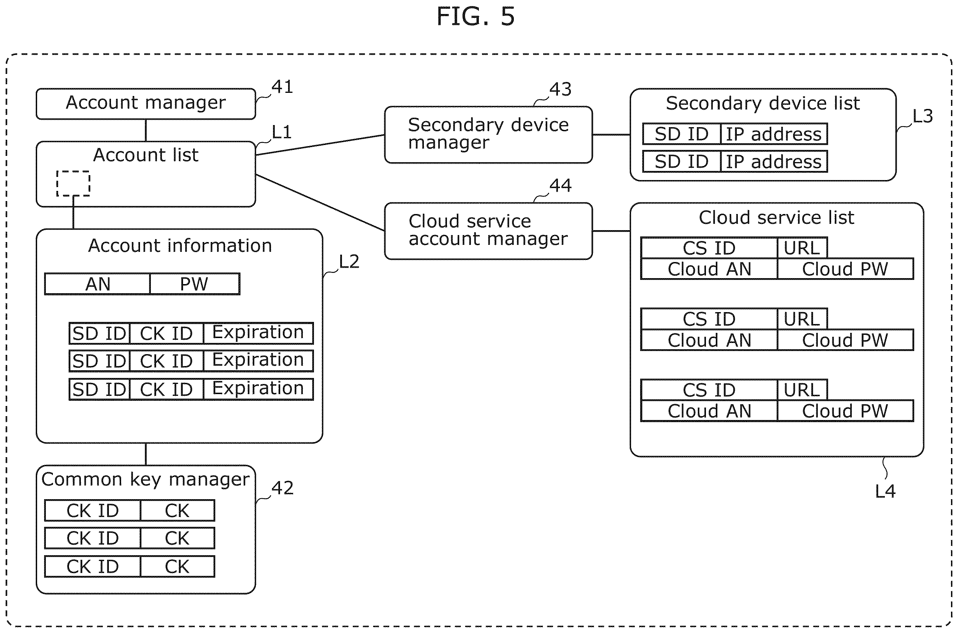

   FIG. 5 is a diagram illustrating an example of the configuration of the primary device and information included in the primary device in the embodiment.
[FIG. 6]

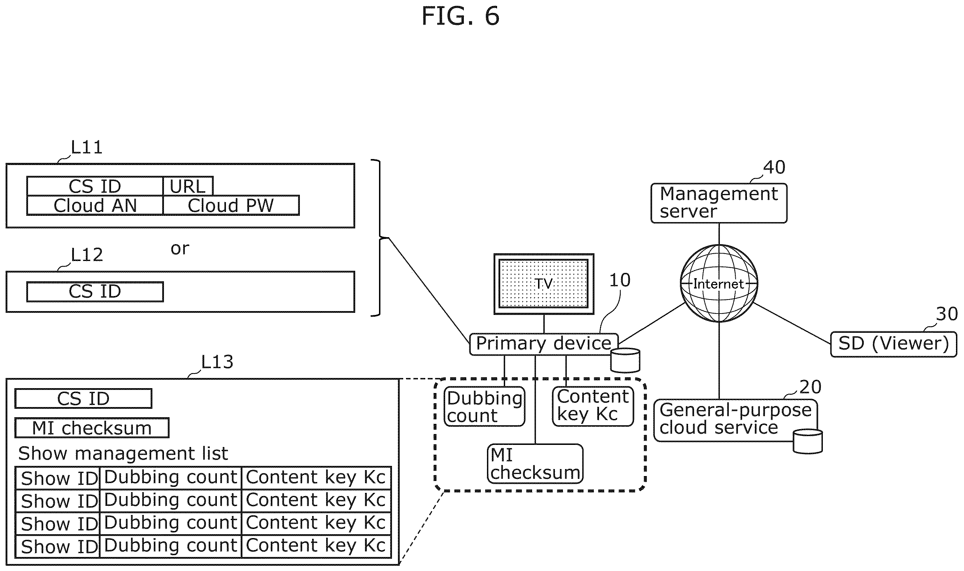

   FIG. 6 is a diagram illustrating another example of the information included in the primary device in the embodiment.
[FIG. 7]

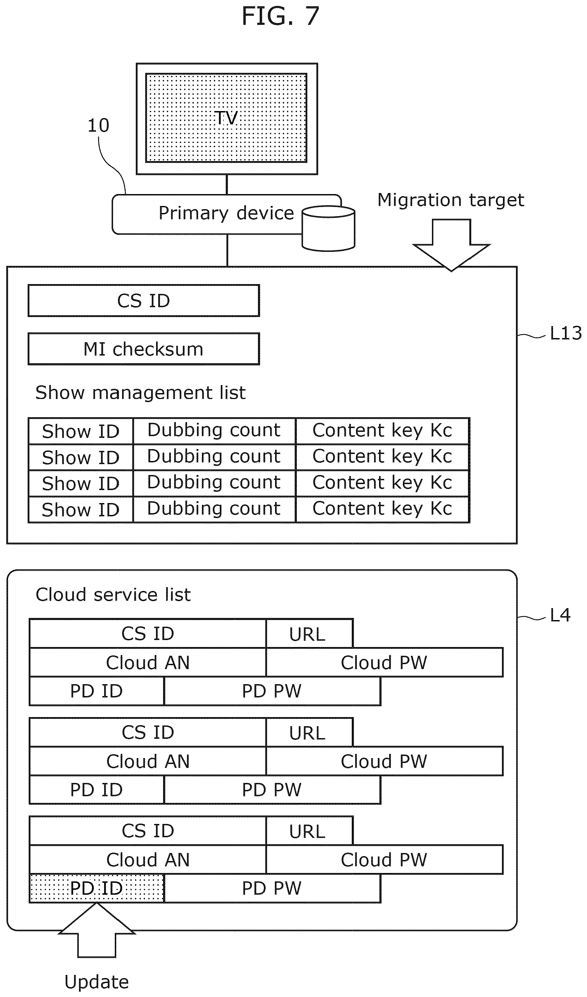

   FIG. 7 is a diagram for describing the migration of a primary device privilege in the embodiment.
[FIG. 8]

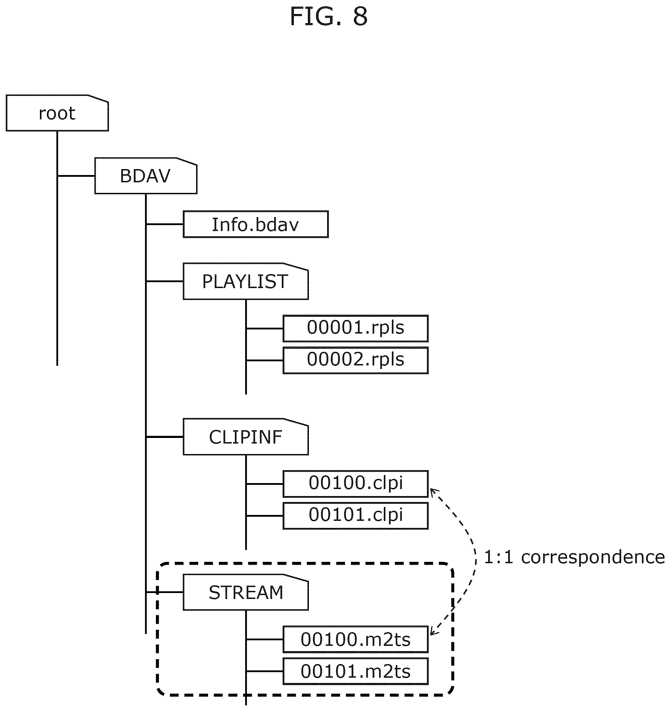

   FIG. 8 is a diagram illustrating an example of a data structure that includes a content and management information in the embodiment.
[FIG. 9]

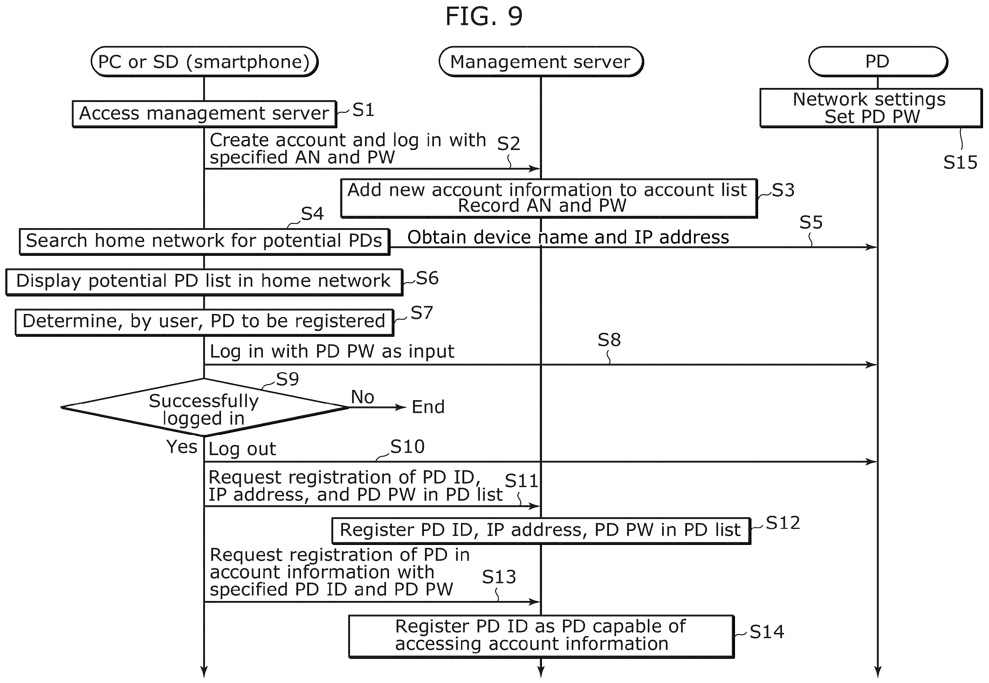

   FIG. 9 is a sequence diagram illustrating an example of a processing operation by the video recording and playback system when an account on the management server is created, and the primary device is registered, in the embodiment.
[FIG. 10]

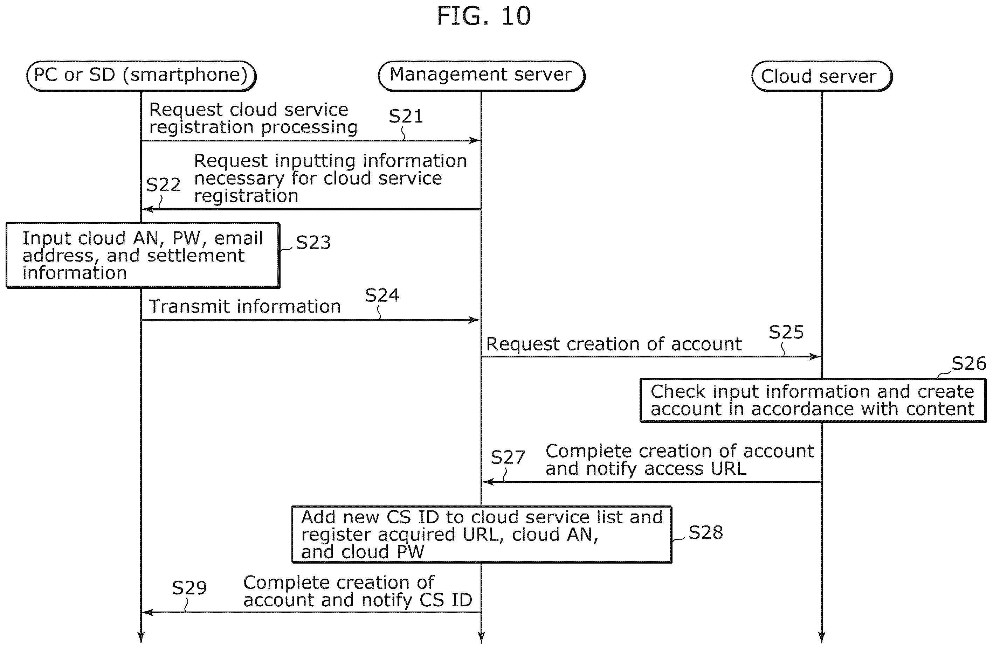

   FIG. 10 is a sequence diagram illustrating an example of a processing operation by the video recording and playback system when a cloud account on a cloud server is created, in the embodiment.
[FIG. 11]

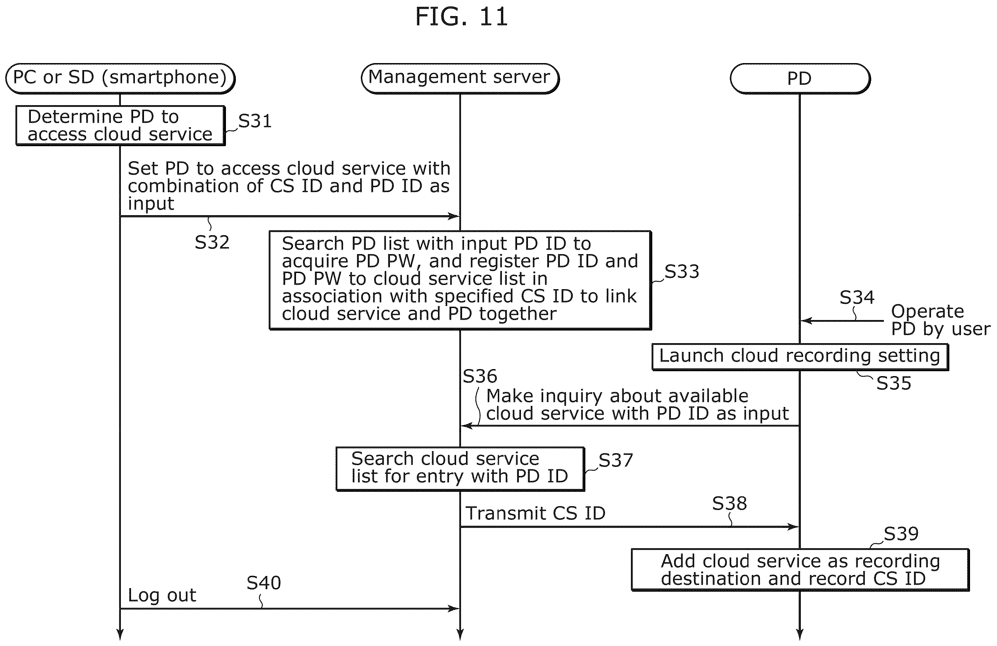

   FIG. 11 is a sequence diagram illustrating an example of a processing operation by the video recording and playback system when the primary device is linked to a cloud service, in the embodiment.
[FIG. 12]

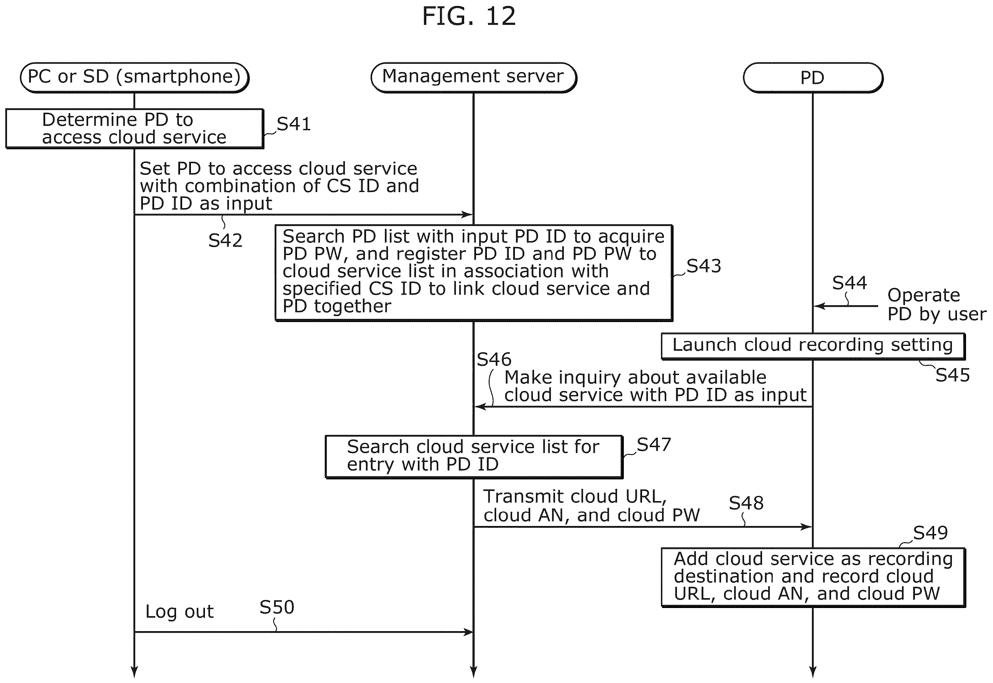

   FIG. 12 is a sequence diagram illustrating another example of a processing operation by the video recording and playback system when the primary device is linked to a cloud service, in the embodiment.
[FIG. 13]

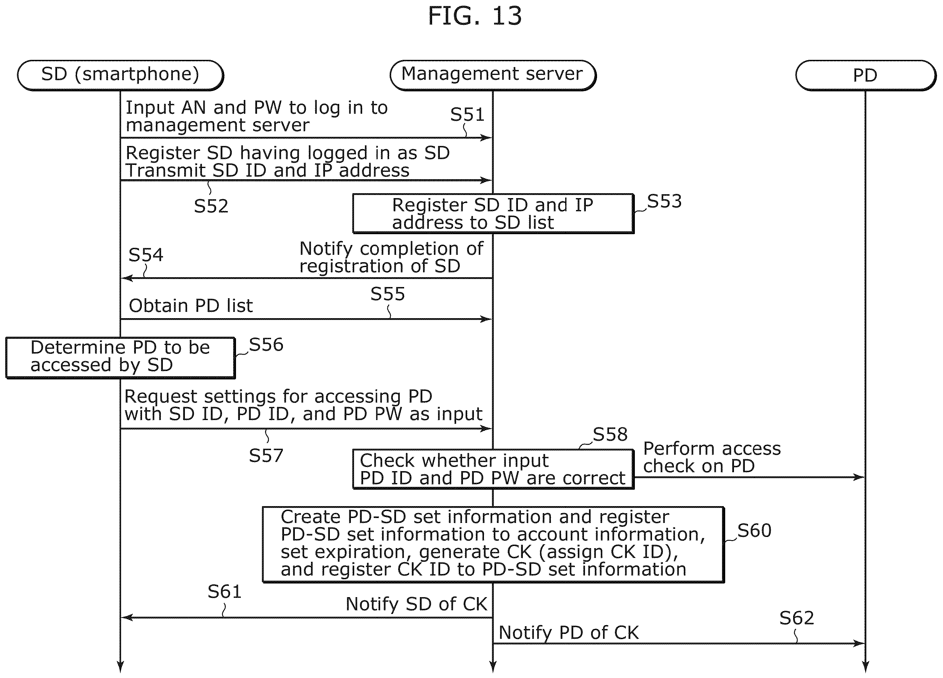

   FIG. 13 is a sequence diagram illustrating an example of a processing operation by the video recording and playback system when a secondary device (SD) is registered and linked to the primary device, in the embodiment.
[FIG. 14]

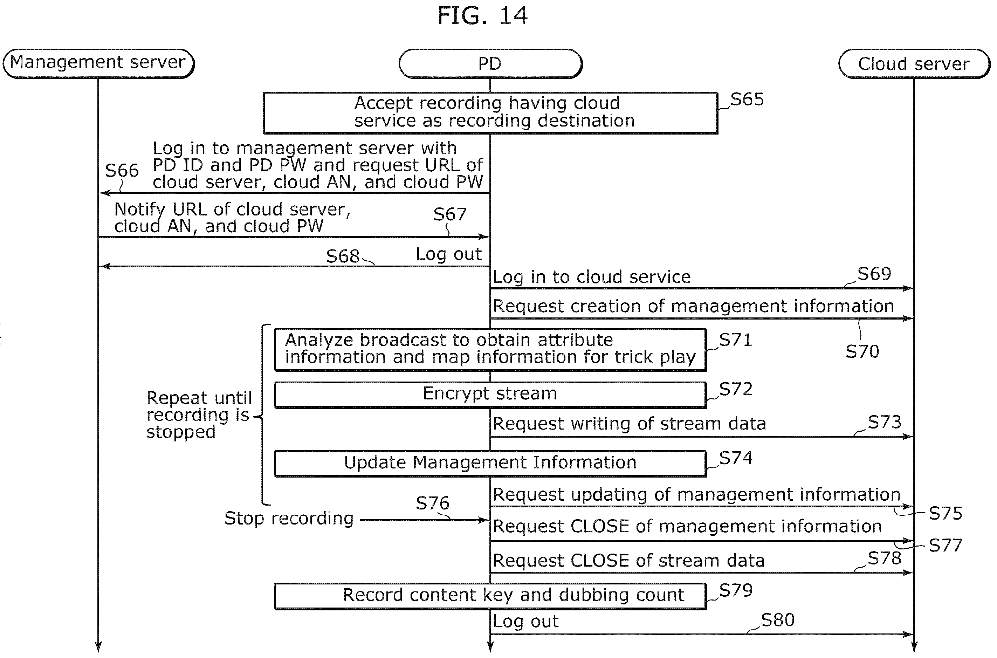

   FIG. 14 is a sequence diagram illustrating an example of a processing operation by the video recording and playback system when the primary device records a content on the cloud service, in the embodiment.
[FIG. 15]

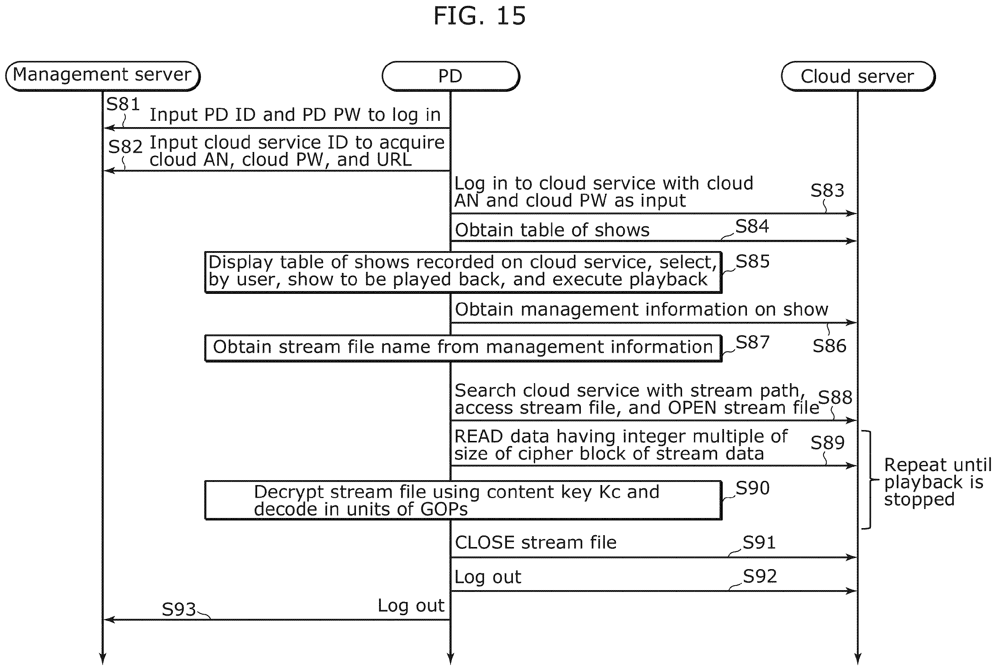

   FIG. 15 is a sequence diagram illustrating an example of a processing operation by the video recording and playback system when the primary device plays back a content on the cloud service, in the embodiment.
[FIG. 16]

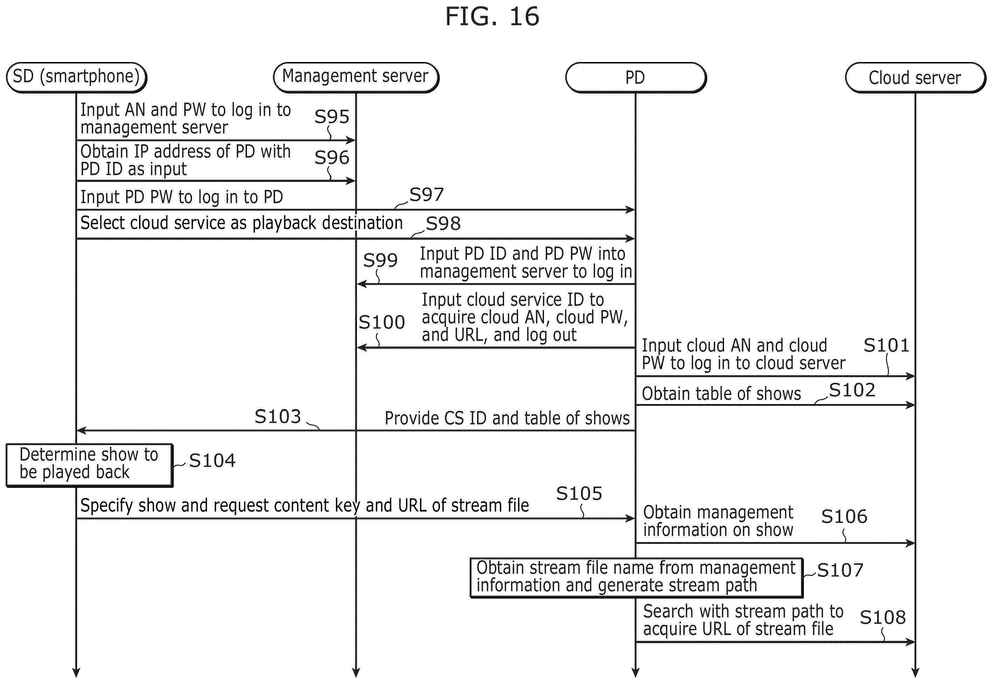

   FIG. 16 is a sequence diagram illustrating an example of a first processing operation of a processing operation by the video recording and playback system when the secondary device plays back a content on the cloud service, in the embodiment.
[FIG. 17]

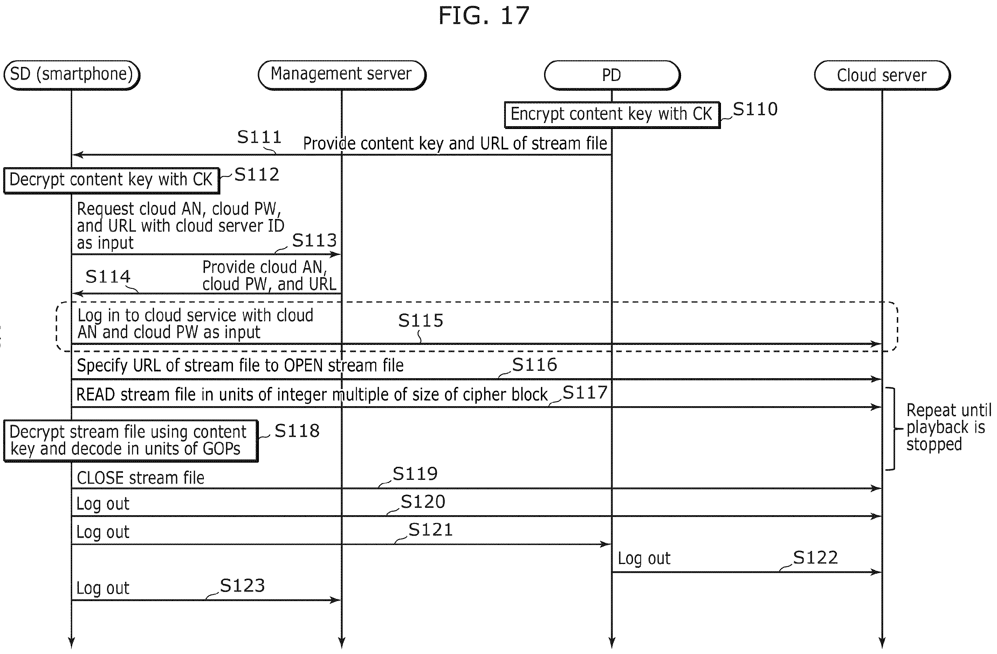

   FIG. 17 is a sequence diagram illustrating an example of a second processing operation of the processing operation by the video recording and playback system when the secondary device plays back a content on the cloud service, in the embodiment.
[FIG. 18]

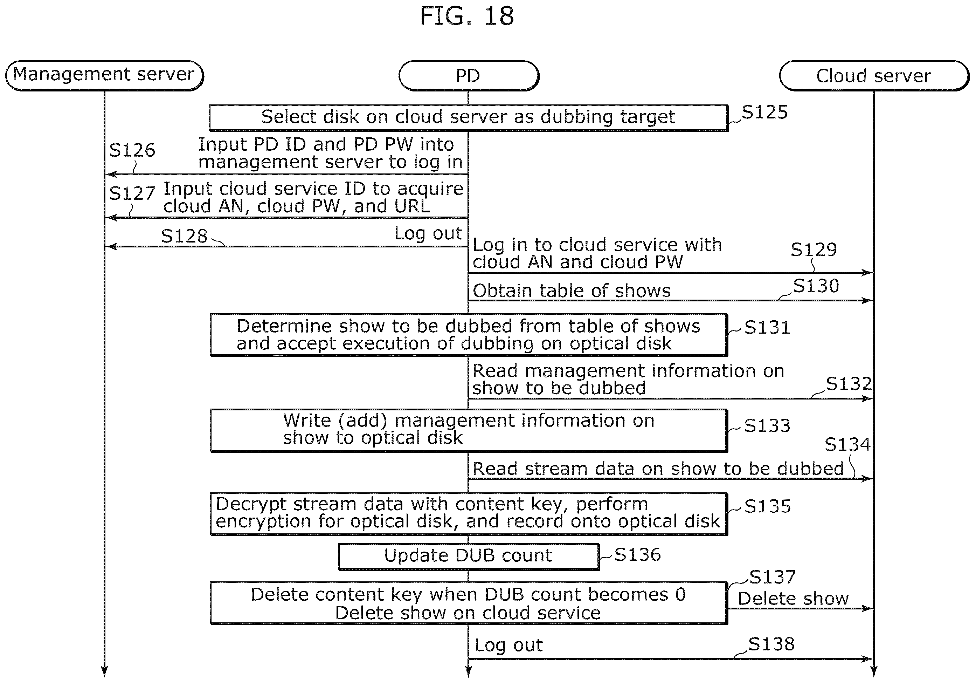

   FIG. 18 is a sequence diagram illustrating an example of a processing operation by the video recording and playback system when the primary device dubs (copies) a content on the cloud service, in the embodiment.
[FIG. 19]

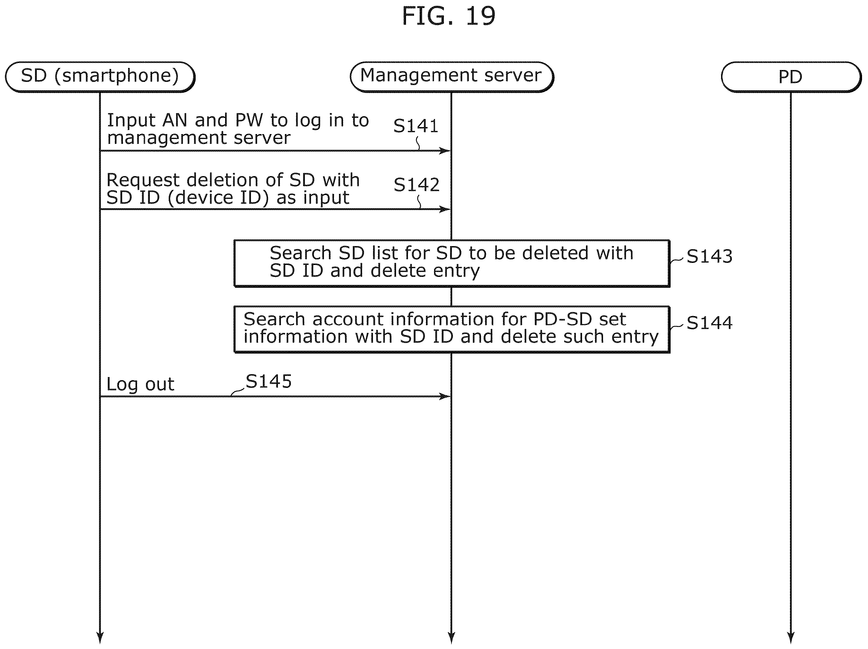

   FIG. 19 is a sequence diagram illustrating an example of a processing operation by the video recording and playback system when the secondary device deletes the registration of the secondary device, in the embodiment.
[FIG. 20]

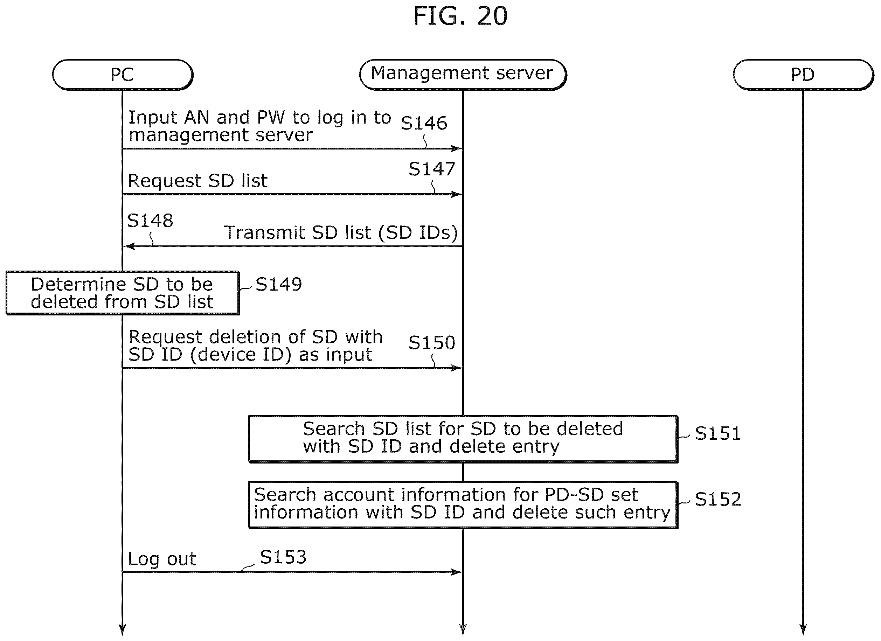

   FIG. 20 is a sequence diagram illustrating an example of a processing operation by the video recording and playback system when the secondary device deletes the registration of another secondary device, in the embodiment.
[FIG. 21]

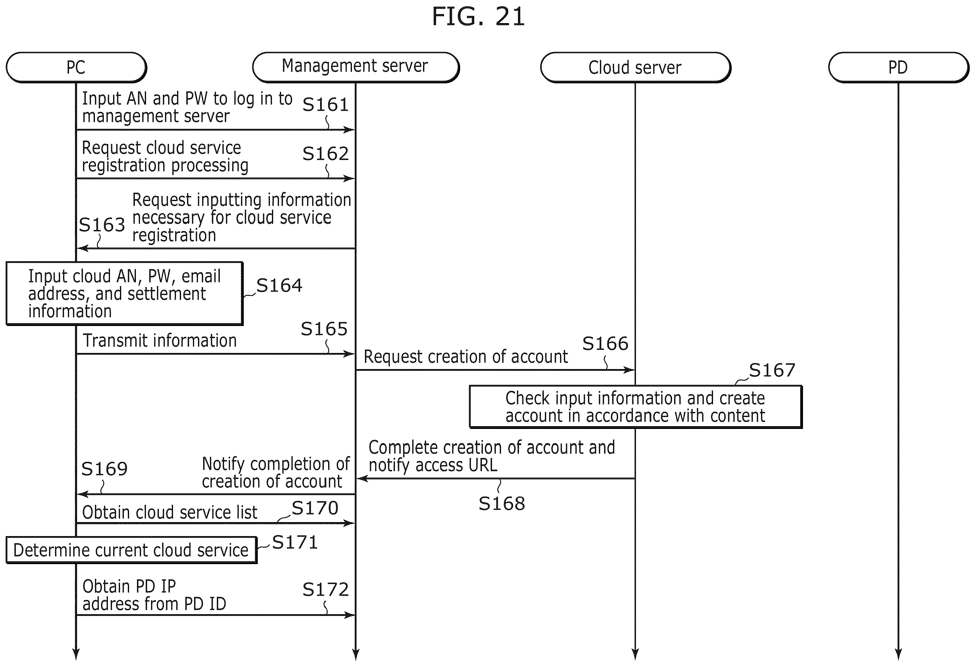

   FIG. 21 is a sequence diagram illustrating an example of a first processing operation included in a processing operation by the video recording and playback system when the secondary device changes the cloud service, in the embodiment.
[FIG. 22]

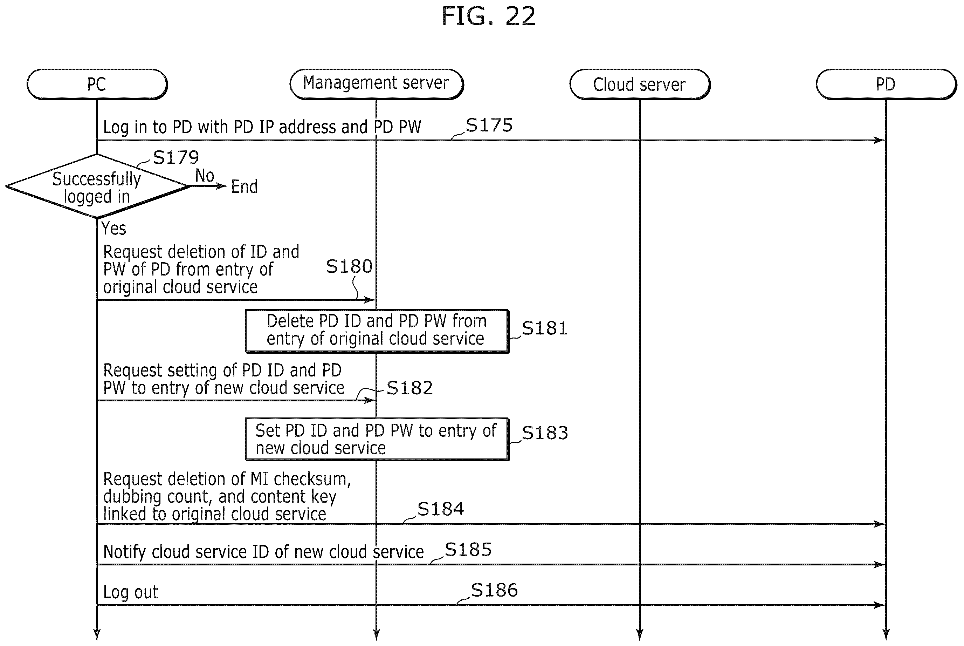

   FIG. 22 is a sequence diagram illustrating an example of a second processing operation included in the processing operation by the video recording and playback system when the secondary device changes the cloud service, in the embodiment.
[FIG. 23]

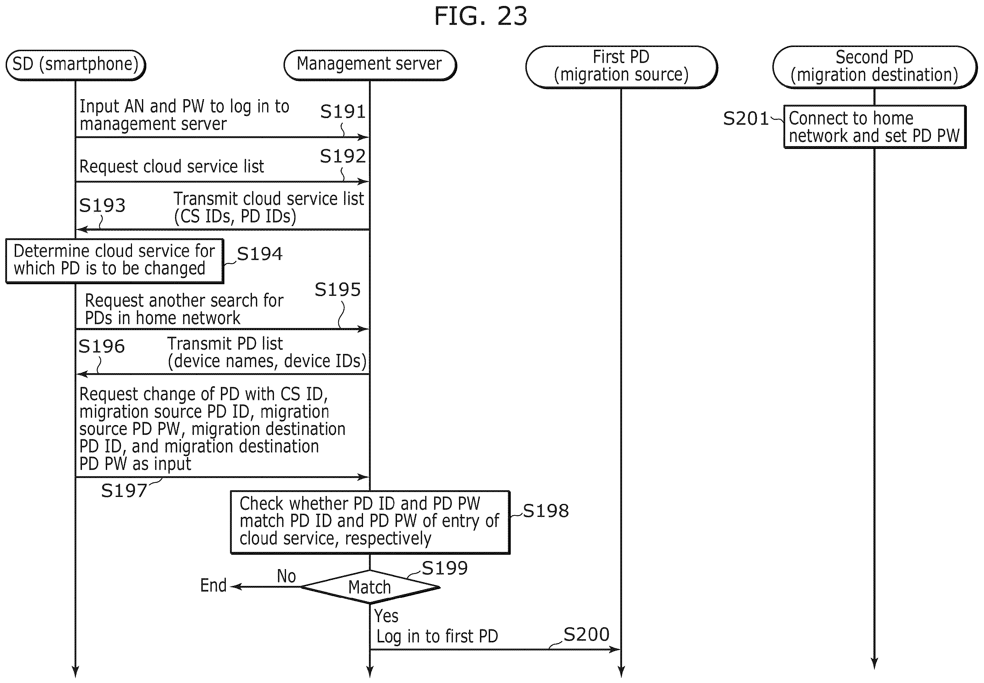

   FIG. 23 is a sequence diagram illustrating an example of a first processing operation of a processing operation by the video recording and playback system when the migration of a primary device privilege is performed, in the embodiment.
[FIG. 24]

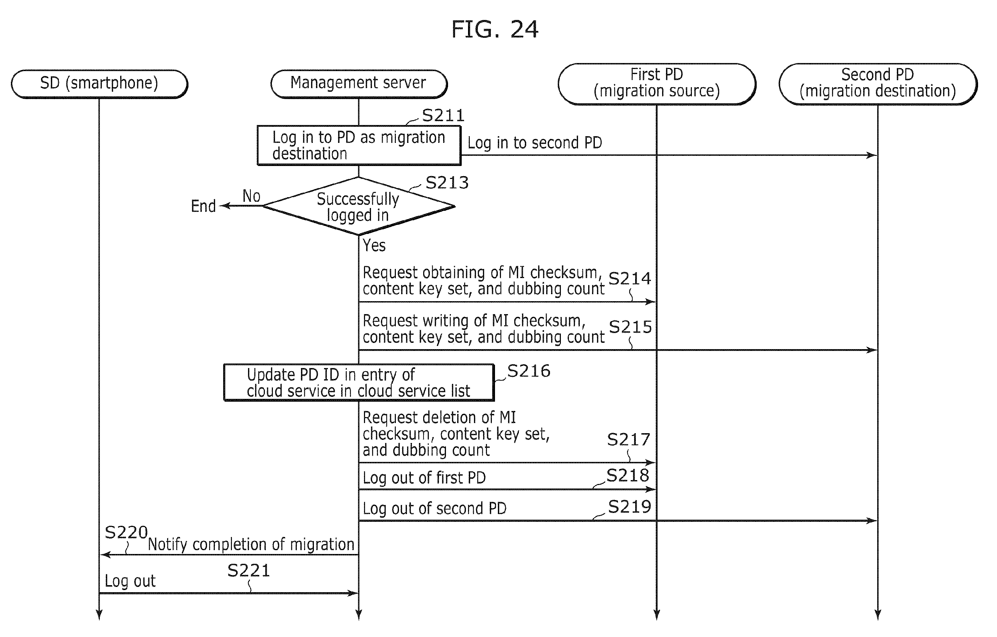

   FIG. 24 is a sequence diagram illustrating an example of a second processing operation of the processing operation by the video recording and playback system when the migration of a primary device privilege is performed, in the embodiment.
[FIG. 25]

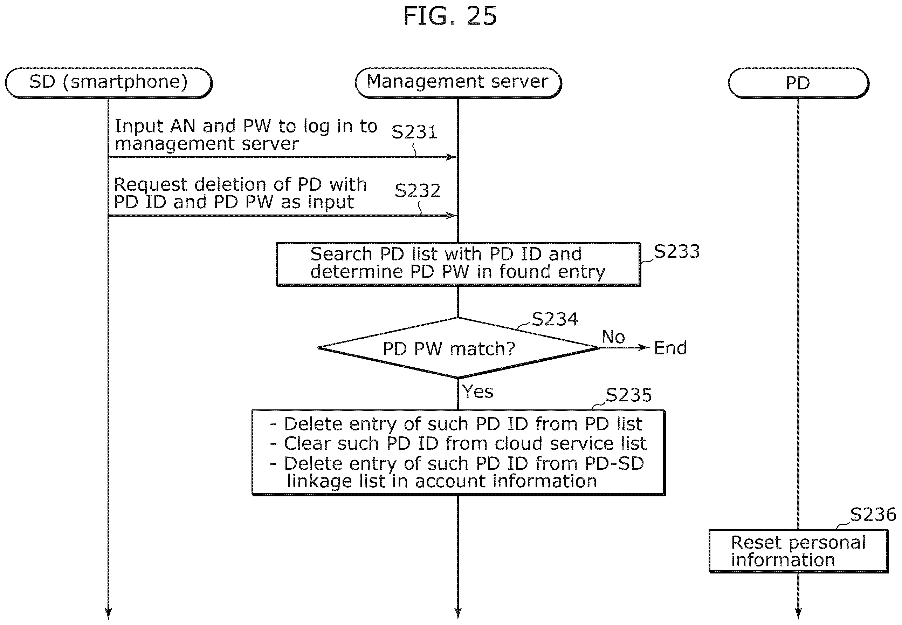

   FIG. 25 is a sequence diagram illustrating an example of a processing operation by the video recording and playback system when the primary device is transferred, in the embodiment.

### [Description of Embodiments]

A terminal device according to an aspect of the present disclosure is a terminal device to be used in a video recording and playback system. The video recording and playback system includes: a cloud server device; a video recording device that receives and encrypts a content that is distributed, and records the content encrypted, on the cloud server device via Internet; and the terminal device that plays back the content. The terminal device includes: a circuit; and a memory connected to the circuit. Using the memory, the circuit: performs device authentication with the video recording device; obtains a content key that is encrypted from the video recording device; decrypts the content key using a common key shared between the video recording device and the terminal device; reads the content that is encrypted and recorded on the cloud server device, by accessing the cloud server device without passing through the video recording device; and decrypts the content read using the content key to play back the content. It should be noted that the terminal device, the video recording device, and the cloud server device are also referred to as a primary device, a secondary device, and a cloud server, respectively.

Accordingly, even in the case of performing cloud recording in which the video recording device records a content on the cloud server device, when the content is played back directly from the cloud server device, the terminal device can guarantee the scope of personal use and provide a function of a free playback to a user while protecting the content adequately. For example, it is possible to suppress a playback of a content on the cloud server device by an arbitrary terminal. Thus, it is possible to appropriately suppress unauthorized acts regarding content, and it is possible to implement an appropriate secondary device access control.

Furthermore, the circuit may perform device authentication with the video recording device via a management server device to obtain the common key to be transmitted from the management server device to the terminal device and the video recording device.

Accordingly, since the common key is shared between the terminal device and the video recording device by way of device authentication, the strength of security can be enhanced.

Furthermore, a video recording management system according to an aspect of the present disclosure is video recording management system to be used in a video recording and playback system. The video recording and playback system includes: a cloud server device; the video recording management system that receives and encrypts a content that is distributed, and records the content encrypted, on the cloud server device via Internet; and a terminal device that plays back the content. The video recording management system includes: a circuit; and at least one memory. The at least one memory holds, in association with the cloud server device, validity determination information and a content key, and the circuit: reads the content key from the at least one memory, and uses the content key in encrypting the content; and reads the validity determination information from the at least one memory, and determines, using the validity determination information, validity of the content recorded on the cloud server device. For example, the video recording management system may include: a video recording device that records the content on the cloud server device; and a management server device connected to the video recording device via the Internet. The circuit and the at least one memory may each be included in the video recording device or the management server device. Furthermore, the validity determination information may be information indicating at least one of a checksum for management information on the content, a hash value for the management information on the content, or a dubbing count of the content. It should be noted that the terminal device, the video recording device, and the cloud server device are also referred to as a primary device, a secondary device, and a cloud server, respectively.

Accordingly, information pertaining to content protection such as the validity determination information or the content key is managed being linked to a cloud server device in at least one memory in the video recording management system, which is an area that cannot be accessed by unspecified user, rather than in the cloud server device. Therefore, the validity determination information linked to the cloud server device (the checksum or hash value for management information, the dubbing count of each show, etc.) and a content key are managed in the video recording management system, in other words, in the primary device or the management server. It is thus possible to implement such a framework in which, if an illegal COPY of a content is created, the COPY is treated as being invalid and cannot be played back. That is, it is possible to implement an appropriate anti-illegal-COPY measure on a cloud service. Therefore, it is possible to appropriately suppress unauthorized acts regarding content.

Furthermore, when the management information is held and updated by each of the video recording management system and the cloud server device, the circuit may determine the validity of the content recorded on the cloud server device by comparing the validity determination information obtainable from the management information on the video recording management system and the validity determination information obtainable from the management information of the cloud server device.

Accordingly, the validity determination information in the video recording management system and the validity determination information in the cloud server device are compared. For example, when they are different from each other, the content is determined to be invalid. As a result, it is possible to appropriately determine the validity of the content.

Furthermore, a management server device according to an aspect of the present disclosure is a management server device to be used in a video recording and playback system. The video recording and playback system includes: a cloud server device; a first video recording device that receives and encrypts a content that is distributed, and records the content encrypted, on the cloud server device via Internet; a terminal device that plays back the content; and the management server device that is connected to the first video recording device via Internet. The management server device includes: a circuit; and a memory connected to the circuit. The memory holds, in association with the cloud server device, first identification information for identifying the first video recording device, and the circuit, when the first video recording device is to be replaced with a second video recording device: replaces the first identification information held by the memory in association with the cloud server device, with second identification information for identifying the second video recording device; and transfers, to the second video recording device, protection information that is used for protecting the content and is held by the first video recording device. It should be noted that the terminal device, the video recording device, and the cloud server device are also referred to as a primary device, a secondary device, and a cloud server, respectively. Furthermore, the protection information indicates, for example, a content key, a checksum or hash value for management information, and a dubbing count, etc.

Accordingly, in the case where the first video recording device is replaced with the second video recording device as mentioned above, the first identification information on the first video recording device associated with the cloud server device is replaced with the second identification information on the second video recording device. In other words, an access privilege to a content on the cloud server device (also called a primary device privilege) is transferred to the second video recording device. Additionally, the protection information that is being held by the first video recording device is transferred to the second video recording device. As a result, it is possible to easily perform the migration of the primary device, in other words, the migration of a primary device privilege from the first video recording device to the second video recording device while protecting a content adequately and dispensing with time and trouble. Therefore, it is possible to appropriately suppress unauthorized acts regarding content. In addition, it is considered that such migration is within the scope of private use and does not exceed the reach of personal use. That is, it is possible to implement an appropriate migration of the primary device.

Furthermore, the circuit, when the first video recording device is detachable from the video recording and playback system, may execute at least one of: (a) deleting the content recorded on the cloud server device by the first video recording device; (b) deleting cloud account information that is for accessing the cloud server device and is held by the first video recording device or the memory; or (c) deleting the first identification information that is held by the memory in association with the cloud account information.

Accordingly, the deletion of a content recorded on a cloud server device, the deletion (or resetting) of cloud account information, and the like are performed. After cloud account information recorded on the first video recording device or the management server device is deleted (or reset), the first video recording device cannot access the cloud server device. Therefore, it is possible to sufficiently suppress an illegal access to the cloud server device by the first video recording device that has been transferred, and it is possible to easily implement an appropriate transfer of the first video recording device, in other words, the primary device.

Furthermore, the protection information is information indicating at least one of a content key for decrypting the content, a checksum for management information of the content, a hash value for the management information of the content, or a dubbing count of the content.

Accordingly, the protection information used for effectively protecting the content is transferred from the first video recording device to the second video recording device. Thus, it is possible to implement an appropriate migration of the primary device with an enhanced strength of security.

Hereinafter, embodiments will be described in detail with reference to the drawings.

It should be noted that each of the subsequently described embodiments shows a generic or specific example. Numerical values, shapes, materials, elements, the arrangement and connection of the elements, steps, and the processing order of the steps are merely examples, and thus are not intended to limit the present disclosure. Furthermore, among the elements described in the following embodiments, those elements that are not described in any of the independent claims which indicate the broadest concepts are described as optional elements.

Furthermore, each of the figures is a schematic diagram and is not necessarily a precise illustration. Moreover, elements that are the same are given the same reference signs in the figures.

### [Embodiment]

FIG. 1 is a diagram illustrating a configuration example of a video recording and playback system in the present embodiment.

Video recording and playback system 100 in the present embodiment includes primary device (PD) 10, cloud server 20, secondary device (SD) 31, secondary device 32, secondary device 33, and management server 40. It should be noted that although video recording and playback system 100 includes secondary devices 31 to 33 in FIG. 1, video recording and playback system 100 may include only one secondary device. In addition, video recording and playback system 100 may include a plurality of primary devices 10.

Primary device 10 is configured as a receiver or a video recording device that receives a content distributed through digital broadcasting, such as a show. Primary device 10 encrypts the received content using content key Kc and records the content on cloud server 20 via the Internet.

Cloud server 20 provides a cloud service to devices that access cloud server 20 via the Internet. The cloud service is a service that stores an encrypted content recorded by primary device 10 and transmits the content to the above-mentioned devices. It should be noted that cloud server 20 may be called a cloud recording server or a cloud server device.

Secondary devices 31 to 33 are each a terminal device that access cloud server 20 via the Internet and receives and plays back a content stored in such cloud server 20. It should be noted that secondary devices 31 to 33 may each be generically referred to as secondary device 30.

Management server 40 manages secondary devices 31 to 33 and common key (CK) Kp that are shared between primary device 10 and each of secondary devices 31 to 33. Common key Kp is also called a symmetric key or a shared key.

It should be noted that primary device 10 is installed, for example, in a home, and such primary device 10 and secondary devices 31 to 33 are connected over the home network.

Processing performed by such video recording and playback system 100 will be described below specifically.

For example, management server 40 accepts, from secondary device 33, the registration of a new user and the registration of cloud server 20 via the Internet. Additionally, management server 40 manages secondary devices 31 to 33 and primary device 10 in a linked manner. Additionally, management server 40 manages the migration of a primary device privilege. The migration of a primary device privilege is the processing of transferring a primary device privilege, which is a function or a role of primary device 10 that accesses cloud server 20 from a video recording device as a migration source to a video recording device as a migration destination. Only a video recording device having the primary device privilege functions as primary device 10 that accesses cloud server 20. It should be noted that hereinafter a video recording device having a primary device privilege and a video recording device having no primary device privilege may both be denoted as primary devices 10.

Additionally, management server 40 issues common key Kp to primary device 10 and secondary devices 31 to 33. For example, management server 40 transmits common key Kp to be shared between primary device 10 and secondary device 32 and cloud server log-in information, which is needed to access cloud server 20, to primary device 10 and secondary device 32. The cloud server log-in information is, for example, information including a cloud account name and a cloud password described later.

When primary device 10 records a content on cloud server 20 (i.e., the cloud service), primary device 10 encrypts the content using content key Kc and records the encrypted content on the cloud service. Although FIG. 1 illustrates primary device 10 such that primary device 10 directly records a content on cloud server 20 via the network, the content may be recorded on the cloud service via a smartphone used as a network router (i.e., a bridge) in such a manner that the smartphone accommodates differences in specifications between cloud services. Accordingly, it is not necessary to change software built in primary device 10 every time a cloud service to be supported is added, and it is possible to respond the addition by only updating software of the smartphone. Primary device 10 need not be aware of information about the cloud service because primary device 10 always only accesses the smartphone.

In addition, primary device 10 encrypts such content key Kc using common key Kp and transmits encrypted content key Kc to secondary device 32 via the Internet.

Secondary device 32 is registered with management server 40 as a device to be linked to primary device 10. Then, secondary device 32 requests the playback of a content from primary device 10. With the request for the playback, secondary device 32 obtains content key Kc encrypted using common key Kp from primary device 10. Secondary device 32 decrypts such content key Kc using common key Kp. Then, secondary device 32 accesses and logs in to cloud server 20 registered with management server 40 and obtains a content stored in such cloud server 20. Additionally, secondary device 32 decrypts the content using content key Kc and plays back the content. In other words, secondary device 32 decodes the stream.

Furthermore, in the case where primary device 10 used in video recording and playback system 100 is replaced with another video recording device, in other words, in the case where the migration of a primary device privilege is to be performed, secondary device 33 registers, for example, a new primary device with management server 40. Primary device 10 forwards content key Kc and the cloud server log-in information to the new primary device. Then, primary device 10 deletes content key Kc and the like.

It should be noted that secondary device 31 is, for example, in a home and satisfies cloud usage requirements. The cloud usage requirements refer to requirements defined for playing back a content recorded on a cloud service. The cloud usage requirements determine details of what secondary devices and primary devices (including a management server) have to meet. That is, secondary device 31 can access cloud server 20 via the Internet and can obtain and play back a content stored in such cloud server 20. In addition, secondary device 32 is, for example, out of the home and satisfies remote viewing requirements. The remote viewing requirements are, for example, ARIB TR-B14 Fascicle 5 Appendix C: Remote Viewing Requirements for Digital Broadcasting Receivers, according to OPERATIONAL GUIDELINES FOR DIGITAL TERRESTRIAL TELEVISION BROADCASTING, an ARIB standard. Additionally, secondary device 32 satisfies the above-mentioned cloud usage requirements. That is, secondary device 32 can access primary device 10 and can obtain and play back a content if the content is stored in such primary device 10. Additionally, secondary device 32 can access cloud server 20 via the Internet and can obtain and play back a content stored in such cloud server 20.

It should be noted that FIG. 1 illustrates an example of the system including management server 40. However, as illustrated in FIG. 5 described later, conceivable cases include the case where primary device 10 has the functions of management server 40 and the case where secondary device 30 such as a smartphone has some or all of the functions of management server 40. In the case where secondary device 30 such as a smartphone has the functions of management server 40, primary device 10 obtains the information on a cloud service from secondary device 30 to access cloud server 20, as in the above-mentioned example. However, in the case where secondary device 30 accesses cloud server 20, information is confined within secondary device 30, and thus, that is, the information is not obtained by an external entity. Therefore, this is suitable for the playback of a content on cloud server 20 by secondary device 30. Nevertheless, the case where there are a plurality of secondary devices 30 causes such a problem that secondary devices 30 each have to hold the information about the cloud service because information in each secondary device 30 cannot be shared. On the other hand, not providing management server 40 is conceivable as an aspect of the present disclosure because it brings about significant advantages in terms of system load.

FIG. 2 is a diagram simply illustrating the configuration of video recording and playback system 100 in the present embodiment.

As illustrated in FIG. 2, primary device 10 is a video recording device placed, for example, in a home and receives a content such as a show that is digital data distributed through broadcasting. Primary device 10 may cause a television to output the received content in the form of video and sound and may store the received content on a recording medium. In addition, primary device 10 in the present embodiment is connected to cloud server 20, secondary device 30, and management server 40 via the Internet. It should be noted that cloud server 20 may be referred to as a general-purpose cloud service. In addition, secondary device 30 may be any one of secondary devices 31 to 33 illustrated in FIG. 1 or may be a group constituted by a plurality secondary devices.

It should be noted that although a content is distributed through broadcasting in the present embodiment, the content may be distributed via the Internet.

FIG. 3 is a diagram illustrating an example of items of information included in primary device 10 and management server 40 of video recording and playback system 100.

Primary device 10 holds, as items of information, the dubbing count of a content, the checksum for the management information on the content, and content key Kc. For example, these items of information are stored in a memory included in primary device 10.

The dubbing count is the number of times a content recorded on cloud server 20 can be dubbed (copied).

The checksum for the management information is the checksum for management information that is information for managing the content recorded on cloud server 20. For example, in the case where one or more contents are recorded according to the Blu-ray (registered trademark) Disc Audio/Visual (BDAV) standard, the checksum for management information is used for determining the validity in BDAV in cloud server 20. That is, the checksum is used for determining the validity of a group of contents recorded according to the BDAV standard (i.e., the entire disk). It should be noted that the checksum is also called management information (MI) checksum. In addition, a specific example of the management information is illustrated in FIG. 8. Furthermore, a dubbing count for each content is also used for determining the validity of the content.

Content key Kc is a key used to encrypt and decrypt a content recorded on cloud server 20.

Management server 40 holds a management list as information. For example, the management list is stored in a memory included in management server 40. The management list is a list for managing primary devices 10, secondary devices 30, and cloud servers 20. The management list includes, for example, account list L1, secondary device list L3, cloud service list L4, and primary device list L5 that are illustrated in FIG. 4.

FIG. 4 is a diagram illustrating an example of the configuration of management server 40 and information included in management server 40.

Management server 40 includes account manager 41, common key manager 42, secondary device manager 43, cloud service account manager 44, and primary device manager 45.

Account manager 41 manages account list L1 that indicates account information L2 on one or more users. For example, account list L1 includes account information L2 on one user. Account information L2 includes the combination of the account name (AN) and the password (PW) of the user and includes a primary-device-secondary-device (PD-SD) linkage list. The primary-device-secondary-device linkage list indicates one or more items of primary-device-secondary-device set information. The items of primary-device-secondary-device set information each indicate the combination of a primary device ID, a secondary device ID, a common key ID, and an expiration. That is, in each combination indicated in the primary-device-secondary-device linkage list, a primary device ID, a secondary device ID, a common key ID, and an expiration are linked together.

The primary device ID is the identification information on primary device 10, and the secondary device ID is the identification information on secondary device 30. The common key ID is information linked to a corresponding common key. The common key ID is the identification information on a common key shared between primary device 10 having the primary device ID and secondary device 30 having the secondary device ID. The expiration is an expiration of authentication on secondary device 30 corresponding to secondary device ID linked to the expiration.

In each combination indicated in the primary-device-secondary-device linkage list indicates the items of identification information on primary device 10 and secondary device 30 that have been subjected to device authentication. Therefore, it can be said that account manager 41 manages the device authentication relationship between primary device 10 and secondary device 30 using account information L2 indicated in account list L1.

It should be noted that primary device IDs indicated in the combinations may be different from one another or may be the same. In addition, the number of secondary device IDs included in each combination is not limited to one and may be more than one.

Common key manager 42 manages one or more common keys Kp. Specifically, common key manager 42 manages, for each account information L2 included in account list L1, common key Kp corresponding to each of one or more common key IDs indicated by such account information L2.

It should be noted that, in the example in FIG. 4, each expiration is illustrated in association with a secondary device ID and a common key ID in the primary-device-secondary-device linkage list of account information L2, but the expiration need not be indicated in the primary-device-secondary-device linkage list. In this case, common key manager 42 may manage, for each common key ID, the expiration of secondary device 30 having common key Kp indicated by the common key ID. That is, the expiration is managed as the expiration of common key Kp.

Primary device manager 45 manages primary device list L5 that indicates information about one or more primary devices 10. Primary device list L5 indicates, for each of one or more primary devices 10 registered with the home network, the primary device ID, the internet protocol (IP) address, and the primary device password of such primary device 10.

Secondary device manager 43 manages secondary device list L3 that indicates information about one or more secondary devices 30. Secondary device list L3 indicates, for each of one or more secondary devices 30 registered with the home network, the secondary device ID and the internet protocol (IP) address of such secondary device 30.

Cloud service account manager 44 manages cloud service list L4 that indicates the relationship between primary device 10 and a cloud service. Cloud service list L4 indicates, for each cloud service, information about the cloud service and information about primary device 10 in a linked manner. The information about the cloud service includes a cloud service (CS) ID that is the identification information on the cloud service, a uniform resource locator (URL) indicating the location of the cloud service, and a cloud account name and a cloud password necessary to use the cloud service. The information about primary device 10 includes a primary device ID and a primary device password.

In the above-mentioned migration of a primary device privilege, cloud service account manager 44 updates a primary device ID in cloud service list L4. In addition, when a cloud service is deleted or changed, cloud service account manager 44 updates cloud service list L4.

In the example in FIG. 4, management server 40 holds the management lists including account list L1, secondary device list L3, and the like. However, primary device 10 may hold the management lists.

FIG. 5 is a diagram illustrating an example of the configuration of primary device 10 and information included in primary device 10.

In the case where primary device 10 includes the management lists, such primary device 10 includes, on behalf of management server 40, account manager 41, common key manager 42, secondary device manager 43, and cloud service account manager 44. In this case, the management lists do not include information about primary device 10. In the case where primary device 10 includes the management lists as in the example illustrated in FIG. 5, it can be said that such primary device 10 has the functions of management server 40. Therefore, in such a case, video recording and playback system 100 need not include management server 40.

It should be noted that, in the example illustrated in FIG. 5, primary device 10 is a multiuser device. Account manager 41 manages account list L1 that indicates account information L2 on a plurality of users. On the other hand, primary device 10 may be a single-user device. In this case, management server 40 directly manages one item of account information L2, without including account manager 41 and account list L1.

In addition, in the example illustrated in FIG. 5, primary device 10 manages common key Kp, and when secondary device 30 is subjected to device authentication, common key Kp is provided to such secondary device 30 and available until its expiration.

FIG. 6 is a diagram illustrating another example of information included in primary device 10.

As illustrated in FIG. 6, primary device 10 includes cloud service information L11 or L12, which is information about a cloud service with which such primary device 10 is registered. Such cloud service information L11 or L12 is stored in the memory included in primary device 10. Cloud service information L11 indicates the cloud service ID, the URL, the cloud account name, and the cloud password of the cloud service with which primary device 10 is registered.

In contrast, cloud service information L12 indicates the cloud service ID of the cloud service with which primary device 10 is registered, while not indicating the URL, the cloud account name, and the cloud password of the cloud service. It should be noted that, in examples in the present embodiment illustrated in FIG. 9 to FIG. 25, primary device 10 includes cloud service information L12 rather than cloud service information L11 and performs processing in which such cloud service information L12 is used. In this case, whenever primary device 10 and secondary device 30 access a cloud service, primary device 10 and secondary device 30 need to obtain the URL, the cloud account name, and the cloud password of the cloud service from management server 40.

In addition, primary device 10 holds content-related information L13 that indicates a dubbing count, the checksum for management information, and content key Kc. Specifically, content-related information L13 indicates a cloud service ID, a management information checksum relating to a cloud service indicated by the cloud service ID, and a show management list of the cloud service.

The show management list indicates, for each show being a content recorded on the cloud service, a show ID that is the identification information on the show, a dubbing count of the show, and content key Kc of the show. It should be noted that, as the show ID, for example, a five-digit-number file name of an rpls file illustrated in FIG. 8 described later may be used.

Furthermore, in FIG. 6, it is assumed that primary device 10 includes content-related information L13. However, it is conceivable that the entire or part of content-related information L13 is included in management server 40. Content-related information L13 included in management server 40 enables content-related information L13 to be obtained from management server 40 irrespective of the power state (ON/OFF) of primary device 10 and enables a direct playback from cloud service 20 even when primary device 10 is turned off.

FIG. 7 is a diagram for describing the migration of a primary device privilege.

In the migration of a primary device privilege, management server 40 rewrites a primary device ID and a primary device password indicated in cloud service list L4. At this time, a dubbing count, content key Kc, a management information checksum, and the like managed by primary device 10 as a migration source are handed over between a video recording device that is primary device 10 as the migration source and a video recording device as a migration destination to newly serve as primary device 10. After two steps including the rewriting at management server 40 and the handing over between the video recording devices, the migration of a primary device privilege is completed.

It should be noted that, in the case where primary device 10 includes the functions of management server 40, in other words, in the case where management server 40 is not included in video recording and playback system 100, cloud service list L4 is present in primary device 10 as illustrated in FIG. 5. Therefore, in addition to the dubbing count, content key Kc, the management information checksum, and the like, cloud service list L4 is handed over between the video recording devices. However, in such an example, there is such a security hole that the primary device privilege may be illegally duplicated when a user, for example, turns off the power during the migration operation. Therefore, the configuration in which video recording and playback system 100 includes management server 40 separately from primary device 10 can enhance safety more than the configuration in which primary device 10 includes the functions of management server 40.

In addition, at the time of the migration of a primary device privilege, common key Kp and the device authentication state of secondary device 30 may be handed over between the video recording devices. However, as for the device authentication, the information on primary device 10 is also held by secondary device 30, and thus the migration is not completed by only processing in primary device 10 and management server 40. Therefore, new primary device 10 may redo a procedure from the device authentication of secondary device 30, without the handing over of common key Kp and the device authentication state of secondary device 30. In this case, the strength of security can be enhanced more than the case where the handing over is performed.

FIG. 8 is a diagram illustrating an example of a data structure that includes a content and management information.

For example, as illustrated in FIG. 8, cloud server 20 stores one or more contents in a data structure conforming to the BDAV standard. In this data structure, a root directory contains a BDAV directory. The BDAV directory is a parent directory in the BDAV standard. This BDAV directory contains the file "Info.bdav", a PLAYLIST directory, a CLIPINF directory, and a STREAM directory.

The file "Info.bdav" is the management information on all the data under the BDAV directory and includes a show list (i.e., a table of shows). For example, the checksum or hash value for the file "Info.bdav" is used to determine the validity of the entire BDAV directory (i.e., the entire disk mentioned above). That is, an example of the above-mentioned management information checksum is the checksum for the file "Info.bdav".

The PLAYLIST directory contains rpls files such as "00001.rpls". The rpls files each indicate detailed information such as a show name and further indicate a playback order (scenario) of clpi files contained in the CLIPINF directory.

The CLIPINF directory contains clpi files such as "00100.clpi". The clpi files are each the management information on a content and each indicate the attribute information on an Audio/Video and a playback map table. It should be noted that in the case where content key Kc is managed within the BDAV standard, content key Kc is managed using this clpi file. In addition, a content is also called a stream, stream data, or a stream file.

Immediately after a content is recorded, files in the PLAYLIST directory and files in the CLIPINF directory regarding the content are typically in a one-to-one relationship. In the case where shows are joined together, one show (i.e., a file in the PLAYLIST directory) may refer to a plurality of files in the CLIPINF directory. Conversely, in the case where a show is divided, a plurality of files in the PLAYLIST directory may refer to (or share) one file in the CLIPINF directory. It should be noted that, in joining shows or dividing a show, one or more files in the CLIPINF directory and one or more files in the STREAM directory are not changed, and only one or more files in the PLAYLIST directory are modified. It should be noted that, in joining shows or dividing a show, processing conforming to the BDAV standard is performed.

The STREAM directory contains m2ts files such as "00100.m2ts". The m2ts files are each stream data corresponding to a content. Playing back a content requires, at a minimum, an m2ts file. In addition, in the data structure illustrated in FIG. 8, at least the STREAM directory containing an m2ts file needs to be placed on a cloud service. Furthermore, a file in the CLIPINF directory and a file in the STREAM directory are in a one-to-one relationship. It should be noted that a file contained in the STREAM directory is assumed as M2TS because the above description is given here with an MPEG2 Transport stream taken as an example. However, in the case where a 4K broadcasting is recorded, an MMT/TLV stream is recorded, and thus an MMTS file is recorded. Although the file name differs among containers to store a stream, FIG. 8 suggests that a stream is recorded there.

Here, the validity of a content is determined by primary device 10, which cannot be operated by a user. The validity of a content on cloud server 20 is determined by at least one of a first determination method or a second determination method.

In the first determination method, the checksum, hash value, or the like for management information are used. For example, in the case where a content is recorded on cloud server 20 in conformity with the structure of management information according to the BDAV standard, the above-mentioned "info.bdav" file for managing the entire disk is present. By constantly updating the checksum for this file and continuously synchronizing the checksum between cloud server 20 and primary device 10, it is possible to determine the validity of the entire disk. That is, primary device 10 and cloud server 20 each repeatedly execute the update of the checksum for the "info.bdav" file in a synchronized manner. When the checksum updated by primary device 10 is different from the checksum updated by cloud server 20, such primary device 10 determines that an invalid content is included in all contents managed with the "info.bdav" file in cloud server 20. In this case, a dubbing count may be held by cloud server 20.

In the second determination method, primary device 10 manages dubbing counts of individual shows. Every time dubbing of a content is performed, primary device 10 decrements the dubbing count of the content by one. When the dubbing count finally becomes zero, primary device 10 deletes the entry of a show being the content from a show management list included in primary device 10. Accordingly, if a COPY show of a legal show is illegally created, the legal show is repeatedly dubbed, and the legal show on cloud server 20 is replaced with the COPY show, dubbing beyond a specified number of times can be suppressed.

Only by the second determination method, the dubbing count of a content is checked at the timing when processing is actually executed on the content, and the content is determined to be invalid depending on the dubbing count. Therefore, a user takes time to choose the show, only to be informed that the show is invalid. In contrast, by the first determination method, it is possible to determine whether a disk (i.e., a BDAV directory) is valid or invalid at the instant when the disk is accessed, and thus a warning panel can be quickly displayed to a user.

In addition, in the present embodiment, cloud server 20 holds a content in conformity with the BDAV standard so that secondary device 30 can also directly access cloud server 20 to play back the content. That is, cloud server 20 holds not only the content but also the management information on the content. Therefore, secondary device 30 can execute playback processing including the interpretation of management information according to the BDAV standard stored in cloud server 20 by itself only by acquiring content key Kc from primary device 10 using application software capable of interpreting the BDAV standard (also called a viewer app). However, in the present embodiment, the management information is basically interpreted by primary device 10. It is noted that in the case where secondary device 30 is equipped with the viewer app that interprets the management information as mentioned above, the playback processing including the interpretation may be complete in secondary device 30.

In contrast, in order to minimize the information to be placed on cloud server 20, only a content being stream data may be placed on cloud server 20, and the rest of the information, the management information, may be held by primary device 10. Alternatively, the rest of the information, the management information may be held by management server 40 rather than primary device 10. In this case, by configuring management server 40 to also hold content key Kc, it is possible to completely isolate the implementation of a playback from secondary device 30 from the device state of primary device 10.

In this case, displaying a content list (i.e., a table of shows), selecting a show to be played back, determining a playback position, and the like are carried out by secondary device 30 making an inquiry to primary device 10. Secondary device 30 acquires the URL of stream data (i.e., the URL of a cloud service providing the stream data) from primary device 10 and finally accesses cloud server 20 only to acquire a content being the stream data to be played back. It should be noted that in the case of remote viewing, primary device 10 decrypts the stream data and distributes the stream data to secondary device 30 while protecting (i.e., encrypting) the stream data under digital transmission content protection (DTCP).

In addition, the method for determining the validity of a content may differ between case 1 where the management information is placed on cloud server 20 and case 2 where the management information is placed on primary device 10. In case 1, the dubbing count, the checksum, and the like are used to determine the validity. In contrast, in case 2, such determination of the validity using the checksum may be dispensed with because all the BDAV management information except the stream data is present in primary device 10.

It should be noted that, in the present embodiment, the data structure according to the BDAV standard is used as an example of the data structure. However, in the present embodiment, the data structure is not limited to the data structure according to the BDAV standard, and any data structure that contains the content list, the management information on individual contents, and stream files may be used.

FIG. 9 is a sequence diagram illustrating an example of a processing operation by video recording and playback system 100 when an account on management server 40 is created, and primary device 10 is registered.

First, secondary device 30 that is, for example, a personal computer (also called a PC) or a smartphone accesses management server 40 (step S1). Then, specifying an account name and a password, secondary device 30 requests management server 40 to create an account and logs in to management server 40 (step S2).

Management server 40 newly adds account information L2 to account list L1, and records the specified account name and password mentioned above on such account information L2 (step S3).

Meanwhile, one or more primary devices 10 each set a home network and further set a primary device password in accordance with, for example, an input operation by a user (step S15). That is, one or more primary devices 10 are connected to the home network and each hold a device name, an IP address, and a primary device password. It should be noted that the device name is set by the user. Alternatively, the device name may be a primary device ID that is uniquely determined.

Secondary device 30 searches for one or more primary devices 10 connected to the home network as potential primary devices 10 to be registered (step S4). That is, secondary device 30 obtains, from one or more primary devices 10 connected to the home network, the device names and IP addresses of such primary devices 10 (step S5). Then, secondary device 30 displays a list of one or more primary devices 10 connected to the home network as a potential primary device list (step S6). The potential primary device list indicates, for example, the device names and IP addresses of one or more primary devices 10 mentioned above. From the potential primary device list, secondary device 30 determines primary device 10 to be registered, in accordance with a registration operation by the user (step S7). Then, secondary device 30 tries logging in to determined primary device 10 by inputting its primary device password (step S8).

Secondary device 30 determines whether the login by the processing of step S8 has succeeded (step S9). Here, if determining that the login has failed (No in step S9), secondary device 30 finishes the processing for registering primary device 10. On the other hand, if determining that the login has succeeded (Yes in step S9), secondary device 30 logs out of primary device 10 that is logged in to in step S8 (step S10). Additionally, secondary device 30 requests management server 40 to register primary device 10 to primary device list L5 included in management server 40, in other words, to register the primary device ID, IP address, and primary device password of primary device 10 determined in step S7 (step S11). In response to the request from such secondary device 30, management server 40 registers the primary device ID, IP address, and primary device password to primary device list L5 (step S12).

Next, specifying the primary device ID and primary device password of primary device 10 determined in step S7, secondary device 30 requests management server 40 to register the primary device to account information L2 (step S13). In response to the request from such secondary device 30, management server 40 registers primary device 10 determined in step S7 to account information L2 as primary device 10 capable of accessing cloud server 20. In other words, management server 40 registers the primary device ID specified by secondary device 30 to account information L2 (step S14).

FIG. 10 is a sequence diagram illustrating an example of a processing operation by video recording and playback system 100 when a cloud account on cloud server 20 is created.

First, secondary device 30 that is, for example, a PC or a smartphone requests cloud service registration processing from management server 40 (step S21). In response to the request from such secondary device 30, management server 40 requests such secondary device 30 to input information necessary for the cloud service registration processing (step S22).

As the input of the information necessary for the cloud service registration processing, secondary device 30 accepts the input of a cloud account name, cloud password, email address, settlement information, and the like in accordance with, for example, an input operation by a user (step S23). Then, secondary device 30 transmits the information to management server 40 (step S24).

Receiving the above-mentioned information from secondary device 30, management server 40 transmits the information to cloud server 20 and requests cloud server 20 to create the cloud account (step S25). Cloud server 20 checks the information (i.e., the input information) and creates the cloud account in accordance with details of the information (step S26). Then, cloud server 20 notifies management server 40 of an access URL and the completion of the creation of the cloud account (step S27).

Management server 40 newly adds a cloud service ID corresponding to the cloud account created by cloud server 20 to cloud service list L4. Additionally, management server 40 registers the access URL notified from cloud server 20 (i.e., the URL) to cloud service list L4 in association with the cloud service ID. Furthermore, management server 40 registers the cloud account name and cloud password indicated by the information transmitted from secondary device 30 to cloud service list L4 in association with the cloud service ID (step S28).

Then, management server 40 notifies secondary device 30 of the cloud service ID and the completion of the creation of the cloud account (step S29).

FIG. 11 is a sequence diagram illustrating an example of a processing operation by video recording and playback system 100 when primary device 10 is linked to a cloud service. It should be noted that, in the example in FIG. 11, a cloud service ID is recorded on primary device 10 by the processing operation. That is, primary device 10 holds cloud service information L12 illustrated in FIG. 6.

First, secondary device 30 determines primary device 10 that is to access the cloud service, in accordance with an input operation by a user (step S31). Then, secondary device 30 sets the primary device that is to access the cloud service by inputting the combination of a cloud service ID corresponding to the cloud service and the primary device ID of determined primary device 10 to management server 40 (step S32).

Management server 40 searches primary device list L5 for the input primary device ID to obtain a primary device password associated with the primary device ID in primary device list L5. Additionally, management server 40 registers the primary device ID and primary device password to cloud service list L4 in association with the cloud service ID input in step S32 (step S33). Accordingly, primary device 10 is linked to the cloud service.

Meanwhile, primary device 10 accepts an input operation by the user (step S34) to launch a cloud recording setting (step S35). Then, primary device 10 inputs the primary device ID to management server 40 and makes an inquiry to management server 40 about an available cloud service (step S36).

In response to the inquiry from primary device 10, management server 40 searches cloud service list L4 for an entry including the primary device ID (step S37). That is, management server 40 searches cloud service list L4 for a cloud service ID associated with the primary device ID. Then, management server 40 transmits the cloud service ID searched for to primary device 10 (step S38). Receiving the cloud service ID from management server 40, primary device 10 adds the cloud service as a recording destination (step S39). That is, primary device 10 records the received cloud service ID on cloud service information L12. It should be noted that, in the example illustrated in FIG. 11, whenever primary device 10 logs in to the cloud service, primary device 10 makes an inquiry to management server 40 about detailed information about the cloud service (e.g., its URL, cloud account name, cloud password, etc.).

In addition, after the processing of step S32, secondary device 30 logs out of management server 40 (step S40).

FIG. 12 is a sequence diagram illustrating another example of the processing operation by video recording and playback system 100 when primary device 10 is linked to a cloud service. It should be noted that, in the example in FIG. 12, not only a cloud service ID but also a cloud account name and a cloud password are recorded on primary device 10 by the processing operation. That is, primary device 10 holds cloud service information L11 illustrated in FIG. 6.

First, video recording and playback system 100 executes processing (steps S41 to S46) that is the same as the processing of steps S31 to S36 illustrated in FIG. 11.

Next, in response to the inquiry from primary device 10, management server 40 searches cloud service list L4 for an entry including the primary device ID input from primary device 10 (step S47). At this time, management server 40 searches cloud service list L4 for a cloud service ID associated with the primary device ID, a URL (i.e., a cloud URL), a cloud account name, and a cloud password. Then, management server 40 transmits the searched-for cloud service ID, URL, cloud account name, and cloud password to primary device 10 (step S48). Receiving the cloud service ID and the like from management server 40, primary device 10 adds the cloud service as a recording destination (step S49). That is, primary device 10 records the received cloud service ID, URL, cloud account name, and cloud password on cloud service information L11. It should be noted that, in the example illustrated in FIG. 12, when primary device 10 logs in to the cloud service, primary device 10 need not make an inquiry to management server 40 about detailed information about the cloud service.

Then, after the processing of step S42, secondary device 30 logs out of management server 40 (step S50).

FIG. 13 is a sequence diagram illustrating an example of a processing operation by video recording and playback system 100 when secondary device 30 is registered and linked to primary device 10.

First, secondary device 30 that is, for example, a smartphone logs in to management server 40 by inputting an account name and password (step S51). Then, secondary device 30 transmits the secondary device ID and IP address of such secondary device 30 to management server 40 so as to register such secondary device 30 that is logging in (step S52).

Receiving the secondary device ID and IP address from secondary device 30, management server 40 registers the secondary device ID and IP address to secondary device list L3 in association with each other (step S53). Then, management server 40 notifies secondary device 30 of the completion of the registration of such secondary device 30 (step S54).

Receiving the notification from management server 40, secondary device 30 obtains primary device list L5 from management server 40 (step S55). It should be noted that primary device passwords are omitted from such primary device list L5. Then, secondary device 30 determines primary device 10 from such primary device list L5 in accordance with an input operation by a user (step S56). That is, secondary device 30 selects primary device 10 to be accessed from such secondary device 30, from among one or more primary devices 10 indicated by primary device list L5. Additionally, secondary device 30 inputs the secondary device ID of such secondary device 30 and the primary device ID and a primary device password of primary device 10 determined from primary device list L5 into management server 40 and requests management server 40 to make settings for accessing such primary device 10 (step S57).

In response to the request from secondary device 30, management server 40 determines whether the input primary device ID and primary device password are correct (step S58). That is, management server 40 performs an access check on primary device 10 using the primary device ID and primary device password to determine whether the primary device ID and primary device password are correct. When the primary device ID and primary device password are correct, management server 40 registers secondary device 30 and primary device 10 in a linked manner by creating primary-device-secondary-device set information in account information L2 (step S60). The primary-device-secondary-device set information is information that indicates a primary device ID determined to be correct, the secondary device ID of secondary device 30 that has made a request to management server 40, common key ID, and the expiration of common key Kp in association with one another. That is, management server 40 sets the expiration, generates common key Kp, and assigns the common key ID to such common key Kp. Through such steps S57 to S60, the device authentication is performed between primary device 10 and secondary device 30. Then, management server 40 notifies secondary device 30 of common key Kp (step S61) and also notifies primary device 10 linked to such secondary device 30 of common key Kp (step S62).

It should be noted that although secondary device 30 and primary device 10 are notified of common key Kp at the timings of steps S61 and S62, respectively, in the example in FIG. 13, secondary device 30 and primary device 10 may be notified at other timings. For example, at the timing when a content of a cloud service is played back, primary device 10 and secondary device 30 may respectively specify the primary device ID and the secondary device ID, and the cloud service ID to management server 40 to request management server 40 to notify them of common key Kp.

In addition, although the access check is performed on primary device 10 in step S58 in the present embodiment, the access check need not be performed. However, in the case where the password of primary device 10 is likely to be changed, such an access check is preferably performed.

FIG. 14 is a sequence diagram illustrating an example of a processing operation by video recording and playback system 100 when primary device 10 records a content on a cloud service.

First, primary device 10 accepts the start of recording in which the cloud service is a recording destination, in accordance with an input operation by a user (step S65). Next, primary device 10 logs in to management server 40 using the primary device ID and primary device password of such primary device 10 and requests the URL, cloud account name, and cloud password of cloud server 20 (i.e., the cloud service) from management server 40 (step S66). In response to the request from primary device 10, management server 40 notifies primary device 10 of the URL, cloud account name, and cloud password of cloud server 20 (step S67).

Receiving the notification from management server 40, primary device 10 logs out of management server 40 (step S68) and logs in to the cloud service using the URL, cloud account name, and cloud password (step S69). Additionally, primary device 10 requests cloud server 20 to create management information (step S70). It should be noted that the management information may be various types of information other than a stream file (i.e., an m2ts file) in the data structure illustrated in FIG. 8.

Subsequently, primary device 10 repeatedly executes the processing of steps S71 to S75 until the recording is stopped. For example, the processing of steps S71 to S75 is executed for each of blocks in a content being broadcast. Specifically, primary device 10 analyzes the content being broadcast to obtain the attribute information on the content, map information for a trick play, and the like (step S71). It should be noted that, for example, in the case of MPEG2Video, the map information for a trick play is a management table for each group of pictures (GOP) and manages address, timecode, and IPIC size in a stream file. Similarly, in the case of H.264 or H.265, map information for a trick play is created every time Ipic in Stream is detected. Such map information for a trick play is used for a time-shift playback, a trick play, and the like and is used in a normal playback for deriving a start address. Next, primary device 10 encrypts stream data being the content using content key Kc (step S72). Primary device 10 requests cloud server 20 to write the encrypted stream data (step S73). Additionally, primary device 10 updates the management information (step S74) and requests cloud server 20 to update the management information (step S75).

Then, primary device 10 accepts an instruction to stop the recording in accordance with, for example, an input operation by the user (step S76) and then requests cloud server 20 to CLOSE the management information (step S77). Additionally, primary device 10 requests cloud server 20 to CLOSE the stream data (step S78). Then, primary device 10 records content key Kc and the dubbing count (step S79) and logs out of cloud server 20 (step S80).

FIG. 15 is a sequence diagram illustrating an example of a processing operation by video recording and playback system 100 when primary device 10 plays back a content on a cloud service.

First, primary device 10 logs in to management server 40 by inputting the primary device ID and primary device password of such primary device 10 (step S81). Next, primary device 10 inputs a cloud service ID into management server 40 to obtain a cloud account name, cloud password, and URL associated with the cloud service ID from management server 40 (step S82). Additionally, primary device 10 logs in to a cloud service indicated by the URL by inputting the cloud account name and cloud password into a cloud service (step S83). Then, primary device 10 obtains a table of shows, which is a list of recorded contents, from the cloud service (i.e., cloud server 20) by reading the table of shows from management information (step S84).

Primary device 10 displays the obtained table of shows, selects a show to be played back from the table of shows in accordance with, for example, an input operation by a user, and starts processing for playing back a content being the show (step S85). That is, primary device 10 obtains the management information on the show from cloud server 20 (step S86) and obtains a stream file name from the management information (step S87). Next, primary device 10 searches the cloud service using a stream path to access a stream file of the stream file name, and OPENs the stream file (step S88).

Then, primary device 10 repeatedly executes the processing of steps S89 and S90 until the playback is stopped. That is, primary device 10 READs data having an integer multiple of the size of a cipher block in the stream file (i.e., stream data) (step S89). Next, primary device 10 decrypts the data of the stream file using content key Kc and decodes the data in units of GOPs (step S90). It should be noted that the unit of encryption (i.e., the cipher block) and the unit of decoding (i.e., GOP) are different from each other. The unit of encryption is of a fixed length, and the unit of decoding is of variable length. Accordingly, the result of the decoding is output to a monitor screen such as a TV, and thus the playback is carried out.

Next, primary device 10 requests cloud server 20 to CLOSE the stream file (step S91) and logs out of cloud server 20 (step S92). Additionally, primary device 10 logs out of management server 40 (step S93). Step S93 may be executed at this timing or may be performed immediately after step S82.

FIG. 16 is a sequence diagram illustrating an example of a first processing operation of a processing operation by video recording and playback system 100 when secondary device 30 plays back a content on a cloud service.

First, secondary device 30 that is, for example, a smartphone logs in to management server 40 by inputting an account name and password (step S95). Then, secondary device 30 inputs a primary device ID into management server 40 to obtain an IP address associated with the primary device ID from management server 40 (step S96). Next, secondary device 30 logs in to primary device 10 corresponding to the primary device ID and IP address by inputting a primary device password (step S97). Additionally, secondary device 30 selects a cloud service to be a playback destination and specifies the cloud service to primary device 10 mentioned above (step S98). At this time, in the case where primary device 10 has a plurality of cloud services as recording destinations, an operational image is such that the cloud services are displayed in the same list as an internal HDD, an optical disk and the like, and a user selects a cloud service to be played back from among them.

Primary device 10 logs in to management server 40 by inputting the primary device ID and primary device password of such primary device 10 (step S99). Then, primary device 10 inputs a cloud service ID held by itself into management server 40 to obtain a cloud account name, cloud password, and URL associated with the cloud service ID from management server 40 and logs out of management server 40 (step S100). Primary device 10 logs in to cloud server 20 corresponding to the obtained URL by inputting the obtained cloud account name and cloud password (step S101). Then, primary device 10 obtains a table of shows from such cloud server 20 by reading management information (step S102) and provides the above-mentioned cloud service ID and the table of shows to secondary device 30 (step S103).

Secondary device 30 determines a show to be played back from the provided table of shows (step S104), specifies the determined show to primary device 10, and requests content key Kc of the show and the URL of the stream file of the show from primary device 10 (step S105).

Receiving the request, primary device 10 obtains the management information on the show from cloud server 20 (step S106). Additionally, primary device 10 obtains a stream file name from the management information and generates a stream path (step S107). Then, primary device 10 searches cloud server 20 for a stream file with the above-mentioned stream file name using the stream path to obtain the URL of the stream file (step S108). Alternatively, primary device 10 may generate a URL for accessing the stream file from a URL for accessing cloud server 20. It is considered that the manner for this differs among cloud services. Thus, it suffices that information that enables the stream file to be accessed by a method appropriate to the server is obtained.

FIG. 17 is a sequence diagram illustrating an example of a second processing operation in the processing operation by video recording and playback system 100 when secondary device 30 plays back a content on a cloud service. It should be noted that the second processing operation is an operation performed subsequently to the first processing operation.

After the processing of step S108 in FIG. 16, primary device 10 encrypts content key Kc of the stream file using common key Kp (step S110). Additionally, primary device 10 provides such encrypted content key Kc and the URL of the stream file to secondary device 30 (step S111).

Obtaining such encrypted content key Kc, secondary device 30 decrypts such content key Kc using common key Kp (step S112). Then, secondary device 30 inputs the cloud service ID provided in step S103 into management server 40 to request a cloud account name, cloud password, and URL associated with the cloud service ID from management server 40 (step S113). In response to the request from secondary device 30, management server 40 provides the cloud account name, cloud password, and URL to secondary device 30 (step S114).

Secondary device 30 logs in to cloud server 20 corresponding to the provided URL by inputting the provided cloud account name and cloud password (step S115). Additionally, specifying the URL of the stream file to cloud server 20, secondary device 30 OPENs the stream file (step S116). Additionally, secondary device 30 repeatedly executes the processing of steps S117 and S118 until the playback is stopped. That is, secondary device 30 READs data having an integer multiple of the size of a cipher block in the stream file (i.e., stream data) (step S117). Next, secondary device 30 decrypts the data of the stream file using content key Kc and decodes the data in units of GOPs (step S118). The result of the decoding is displayed on an output device included in secondary device 30, and thus the playback is carried out.

Additionally, secondary device 30 CLOSEs the stream file on cloud server 20 (step S119). Subsequently, secondary device 30 logs out of cloud server 20 (step S120) and logs out of primary device 10 (step S121). As a result, primary device 10 logs out of cloud server 20 (step S122). Then, secondary device 30 also logs out of management server 40 (step S123).

It should be noted that, in the example in FIG. 17, the login is performed in step S115, but the login may be omitted. In the case where cloud server 20 is set according to settings such that anyone can access cloud server 20, a particular login is not needed. When cloud server 20 is accessed using a URL, a file can be immediately accessed in a READ ONLY manner in some case. Assuming such a case, the login can be eliminated.

FIG. 18 is a sequence diagram illustrating an example of a processing operation by video recording and playback system 100 when primary device 10 dubs (copies) a content on a cloud service.

First, primary device 10 selects a disk on cloud server 20 as a dubbing target in accordance with, for example, an input operation by a user (step S125). Next, primary device 10 logs in to management server 40 by inputting the primary device ID and primary device password of such primary device 10 (step S126). Additionally, primary device 10 inputs a cloud service ID into management server 40 to obtain a cloud account name, cloud password, and URL associated with the cloud service ID from management server 40 (step S127) and logs out of such management server 40 (step S128).

Next, primary device 10 logs in to cloud server 20 corresponding to the URL by inputting the cloud account name and cloud password (step S129) and obtains a table of shows from such cloud server 20 by reading management information (step S130). It should be noted that the table of shows may be called a cloud recorded show list or a show list. Primary device 10 determines a content being a show to be dubbed from the table of shows in accordance with, for example, an input operation by the user and accepts the start of executing the dubbing to an optical disk (step S131).

Thereafter, primary device 10 reads the management information on the show to be dubbed from cloud server 20 (step S132) and writes the management information on the show onto an optical disk placed in primary device 10 (step S133). Then, primary device 10 reads the stream data on the show to be dubbed from cloud server 20 (step S134). Primary device 10 decrypts the read stream data using a content key and further encrypts the stream data for the optical disk, and records the encrypted stream data on the optical disk (step S135). Primary device 10 updates the dubbing count (also called a DUB count) of the show by, for example, decrementing the dubbing count (step S136). Here, when the DUB count becomes zero as a result of the update, primary device 10 deletes the content key of the show and deletes the show on the cloud service (i.e., cloud server 20) (step S137). Then, primary device 10 logs out of cloud server 20 (step S138).

FIG. 19 is a sequence diagram illustrating an example of a processing operation by video recording and playback system 100 when secondary device 30 deletes the registration of such secondary device 30.

First, secondary device 30 that is, for example, a smartphone logs in to management server 40 by inputting an account name and password (step S141). Next, secondary device 30 inputs the secondary device ID of such secondary device 30 into management server 40 to request management server 40 to delete secondary device 30 (step S142).

In response to the request from secondary device 30, management server 40 searches secondary device list L3 for the secondary device ID of secondary device 30 to be deleted and deletes an entry including the secondary device ID (step S143). That is, management server 40 deletes the secondary device ID and an IP address associated with the secondary device ID from secondary device list L3. Next, management server 40 searches account information L2 for primary-device-secondary-device set information including the secondary device ID and deletes an entry being the primary-device-secondary-device set information (step S144). Then, secondary device 30 logs out of management server 40 (step S145).

FIG. 20 is a sequence diagram illustrating an example of a processing operation by video recording and playback system 100 when secondary device 30 deletes the registration of other secondary device 30. For example, secondary device 30 is a PC, and secondary device 30 being the other secondary device is a smartphone.

First, the PC logs in to management server 40 by inputting an account name and password (step S146). Then, the PC requests secondary device list L3 from management server 40 (step S147).

In response to the request from the PC, management server 40 transmits secondary device list L3 to the PC (step S148). Receiving such secondary device list L3, the PC determines secondary device 30 to be deleted (i.e., the smartphone) from such secondary device list L3, in accordance with, for example, an input operation by a user (step S149). Then, the PC inputs the secondary device ID of the determined smartphone into management server 40 to request management server 40 to delete the secondary device (step S150).

In response to the request from the PC, management server 40 searches secondary device list L3 for the secondary device ID of the smartphone to be deleted and deletes an entry including the secondary device ID (step S151). That is, management server 40 deletes the secondary device ID and an IP address associated with the secondary device ID from secondary device list L3. Next, management server 40 searches account information L2 for primary-device-secondary-device set information including the secondary device ID and deletes an entry being the primary-device-secondary-device set information (step S152). Then, the PC logs out of management server 40 (step S153).

FIG. 21 is a sequence diagram illustrating an example of a first processing operation included in a processing operation by video recording and playback system 100 when secondary device 30 changes a cloud service.

First, secondary device 30 that is, for example, a PC logs in to management server 40 by inputting an account name and password (step S161) and requests cloud service registration processing from management server 40 (step S162). In response to the request from such secondary device 30, management server 40 requests such secondary device 30 to input information necessary for the cloud service registration processing (step S163).

As the input of the information necessary for the cloud service registration processing, secondary device 30 accepts the input of a cloud account name, cloud password, email address, settlement information, and the like in accordance with, for example, an input operation by a user (step S164). Then, secondary device 30 transmits the information to management server 40 (step S165).

Receiving the above-mentioned information from secondary device 30, management server 40 transmits the information to cloud server 20 and requests cloud server 20 to create the cloud account (step S166). Cloud server 20 checks the information (i.e., the input information) and creates the cloud account in accordance with details of the information (step S167). Then, cloud server 20 notifies management server 40 of an access URL and the completion of the creation of the cloud account (step S168). Receiving the notification from cloud server 20, management server 40 notifies secondary device 30 of the completion of the creation of the cloud account (step S169).

Receiving the notification of the completion of the creation of the cloud account, secondary device 30 obtains cloud service list L4 from management server 40 (step S170) and determines a currently available cloud service for secondary device 30 from such cloud service list L4 (step S171). It should be noted that cloud passwords and primary device passwords may be omitted from cloud service list L4 provided to secondary device 30 (in the case where cloud service list L4 is managed as a management list in primary device 10). Next, secondary device 30 obtains an IP address associated with a primary device ID of the determined cloud service (i.e., a primary device IP address) from management server 40 (step S172).

FIG. 22 is a sequence diagram illustrating an example of a second processing operation included in the processing operation by video recording and playback system 100 when secondary device 30 changes a cloud service. It should be noted that the second processing operation is an operation performed subsequently to the first processing operation.

Using the primary device IP address obtained in step S172 in FIG. 21 and a primary device password of primary device 10 corresponding to the primary device IP address, secondary device 30 tries logging in to such primary device 10 (step S175). Then, secondary device 30 determines whether the login by the processing of step S175 has succeeded (step S179). Here, if determining that the login has failed (No in step S179), secondary device 30 finishes the processing for changing the cloud service for secondary device 30. On the other hand, if determining that the login has succeeded (Yes in step S179), secondary device 30 requests management server 40 to delete the primary device ID and primary device password of such primary device 10 from an entry of an original cloud service (step S180). It should be noted that the original cloud service is the cloud service determined in step S171 in FIG. 21. That is, what is requested is to delete a primary device ID and primary device password associated with a cloud service ID of the original cloud service from cloud service list L4.

In response to the request from secondary device 30, management server 40 deletes the primary device ID and primary device password from the entry of the original cloud service (step S181).

Next, secondary device 30 requests management server 40 to set the primary device ID and the primary device password to an entry of a new cloud service (step S182). In response to the request from secondary device 30, management server 40 sets the primary device ID and the primary device password to the entry of the new cloud service (step S183). It should be noted that the new cloud service is the cloud service corresponding to the cloud account created in step S167 in FIG. 21. That is, the primary device ID and the primary device password are associated with the cloud service ID indicating the new cloud service in cloud service list L4.

Then, secondary device 30 requests primary device 10 to delete a management information checksum, a dubbing count, and content key Kc associated with the original cloud service (step S184). Additionally, secondary device 30 notifies primary device 10 of the cloud service ID of the new cloud service (step S185) and logs out of primary device 10 (step S186).

In steps S184 and S185, secondary device 30 requests the processing from primary device 10. However, management server 40 may request the processing from primary device 10. Furthermore, in the example in FIG. 22, the processing of deleting a content on cloud server 20 is not described. This is because the content is data that cannot be played back. However, the content is left as unnecessary data. Thus, secondary device 30 or management server 40 may request cloud server 20 to delete the recorded show or perform formatting at the timing of executing step S184.

FIG. 23 is a sequence diagram illustrating an example of a first processing operation of a processing operation by video recording and playback system 100 when the migration of a primary device privilege is performed.

First, secondary device 30 that is, for example, a smartphone logs in to management server 40 by inputting an account name and password (step S191) and requests cloud service list L4 from management server 40 (step S192). In response to the request from secondary device 30, management server 40 transmits cloud service list L4 to secondary device 30 (step S193). It should be noted that cloud passwords and primary device passwords may be omitted from cloud service list L4 provided to secondary device 30.

Receiving cloud service list L4, secondary device 30 determines a cloud service to be a target of the migration of the primary device privilege (hereinafter, also called a processing target cloud service) from such cloud service list L4 in accordance with, for example, an input operation by a user (step S194). In the migration of the primary device privilege, primary device 10 associated with the processing target cloud service is changed. Next, secondary device 30 requests another search of primary devices in the home network from management server 40 (step S195). In response to the request from secondary device 30, management server 40 transmits primary device list L5 to secondary device 30 (step S196). It should be noted that primary device passwords are omitted from primary device list L5.

Receiving primary device list L5, secondary device 30 selects, from such primary device list L5, primary device 10 associated with the processing target cloud service (hereinafter, also called primary device 10 as a migration source) and a primary device to be newly associated with the processing target cloud service (hereinafter, also called primary device 10 as a migration destination) and specifies them to management server 40. That is, secondary device 30 inputs the cloud service ID of the processing target cloud service, the primary device ID and primary device password of primary device 10 as the migration source and the primary device ID and primary device password of primary device 10 as the migration destination into management server 40 to request management server 40 to change primary device 10 (step S197).

In response to the request from secondary device 30, management server 40 determines whether the primary device ID and primary device password of primary device 10 as the migration source match a primary device ID and primary device password included in an entry of the processing target cloud service, respectively (step S198). It should be noted that the primary device ID and primary device password included in the entry of the processing target cloud service are a primary device ID and primary device password that are associated with the cloud service ID of the processing target cloud service in cloud service list L4. Here, when determining that they do not match (No in step S199), management server 40 finishes the processing for the migration of the primary device privilege, and when determining that they match (Yes in step S199), management server 40 logs in to a first primary device (step S200). The first primary device is primary device 10 as the migration source mentioned above.

In addition, a second primary device, which is primary device 10 as the migration destination mentioned above, makes settings of the home network in accordance with, for example, an input operation by the user and further makes a setting of a primary device password (step S201). That is, the second primary device is connected to the home network and holds a primary device ID, an IP address, and a primary device password.

FIG. 24 is a sequence diagram illustrating an example of a second processing operation of the processing operation by video recording and playback system 100 when the migration of the primary device privilege is performed. It should be noted that the second processing operation is an operation performed subsequently to the first processing operation.

Using the primary device ID and primary device password of the second primary device, which is primary device 10 as the migration destination, management server 40 tries logging in to the second primary device (step S211). Management server 40 determines whether the login by the processing of step S211 has succeeded (step S213). Here, if determining that the login has failed (No in step S213), management server 40 finishes the processing for the migration of the primary device privilege. On the other hand, if determining that the login has succeeded (Yes in step S213), management server 40 requests information such as a management information checksum, a content key set, and a dubbing count from the first primary device and obtains the information from the first primary device (step S214). It should be noted that the content key set includes one or more content keys Kc. Additionally, management server 40 requests the second primary device to write information such as the management information checksum, the content key set, and the dubbing count, which are the obtained information and writes the information onto the second primary device (step S215).

Next, management server 40 updates a primary device ID in an entry of the cloud service in cloud service list L4 (step S216). That is, management server 40 changes, in cloud service list L4, the primary device ID associated with the cloud service ID of the processing target cloud service from the primary device ID of the first primary device to the primary device ID of the second primary device. Additionally, management server 40 requests the first primary device to delete information included in the first primary device, such as the management information checksum, the content key set, and the dubbing count (step S217). Then, management server 40 logs out of the first primary device (step S218), logs out of the second primary device (step S219), and notifies secondary device 30 of the completion of the processing of the migration (step S220). Receiving the notification of the completion of the processing of the migration, secondary device 30 logs out of management server 40 (step S221).

FIG. 25 is a sequence diagram illustrating an example of a processing operation by video recording and playback system 100 when primary device 10 is transferred.

First, secondary device 30 that is, for example, a smartphone logs in to management server 40 by inputting an account name and password (step S231). Next, secondary device 30 inputs the primary device ID and primary device password of primary device 10 to be transferred into management server 40 to request management server 40 to delete primary device 10 (step S232).

In response to the request from secondary device 30, management server 40 searches primary device list L5 for the primary device ID and determines a primary device password associated with the primary device ID (step S233). Then, management server 40 determines whether the determined primary device password matches the primary device password input in step S232 (step S234). Here, if determining that the primary device password does not match (No in step S234), management server 40 finishes the processing for transferring primary device 10. On the other hand, if determining that the primary device password matches (Yes in step S234), management server 40 deletes an entry including the primary device ID input in step S232 from primary device list L5. Additionally, management server 40 clears the primary device ID in cloud service list L4 and deletes an entry including the primary device ID (i.e., primary-device-secondary-device set information) from the primary-device-secondary-device linkage list in account information L2 (step S235).

In addition, primary device 10 to be transferred resets personal information held by such primary device 10 in accordance with, for example, an input operation by a user (step S236).

### (Summary of embodiment)

As described above, secondary device 30 according to the present embodiment is a terminal device to be used in video recording and playback system 100. Specifically, video recording and playback system 100 includes: a cloud server device which is cloud server 20; a video recording device that is primary device 10, and the terminal device which is secondary device 30. The video recording device receives and encrypts a content that is distributed, and records the content encrypted, on the cloud server device via Internet. The terminal device plays back the content. Such a terminal device includes: a circuit; and a memory connected to the circuit. Using the memory, the circuit: performs device authentication with the video recording device; obtains a content key that is encrypted from the video recording device; decrypts the content key using a common key shared between the video recording device and the terminal device; reads the content that is encrypted and recorded on the cloud server device, by accessing the cloud server device without passing through the video recording device; and decrypts the content read using the content key to play back the content.

For example, in conventional remote viewing, a primary device and a secondary device both support a content protection technology such as DTCP. With this as a premise, device authentication is performed between the primary device and the secondary device, which guarantees viewing within the scope of personal use. This is established under the constraints provided by such a system configuration that the primary device holds a content, and that the content can be played back via only the primary device. However, in the case where a content is recorded on a cloud server device (i.e., cloud recording), a recording destination of a content is the cloud server device that is a general-purpose server device. It is possible that such a general-purpose cloud server device does not support DTCP or the like. Moreover, a content on the cloud server device can be accessed by any PC if the URL of the content or the cloud server device is known. In addition, the PC does not need to access the content via a primary device. In such circumstances, it is difficult for the techniques of PTL 1 and PTL 2 mentioned above to guarantee the scope of personal use and provide a function of a free playback to a user while protecting a content adequately.

In contrast, a terminal device being secondary device 30 in the present embodiment performs device authentication with a video recording device being the primary device, obtains encrypted content key Kc from the video recording device, and decrypts a content read from a cloud server device using such content key Kc to play back the content. Therefore, in the case where a content is played back directly from the cloud server device, the terminal device can guarantee the scope of personal use and provide a function of a free playback to a user while protecting the content adequately. That is, it is possible to implement an appropriate secondary device access control.

Furthermore, in the terminal device (that is, secondary device 30) according to the present embodiment, the circuit performs device authentication with primary device 10 via management server 40 to obtain common key Kp to be transmitted from management server 40 to secondary device 30 and primary device 10. Accordingly, since common key Kp is shared between secondary device 30 and primary device 10 by way of device authentication, the strength of security can be enhanced.

Furthermore, the video recording management system according to the present embodiment is a system to be used in video recording and playback system 100. Specifically, video recording and playback system 100 includes: a cloud server device which is cloud server 20; the video recording management system; and a terminal device which is secondary device 30. The video recording management system receives and encrypts a content that is distributed, and records the content encrypted, on the cloud server device via Internet. The terminal device plays back the content. Specifically, the video recording management system includes: a circuit; and at least one memory. The at least one memory holds, in association with the cloud server device, validity determination information and a content key. The circuit: reads the content key from the at least one memory, and uses the content key in encrypting the content; and reads the validity determination information from the at least one memory, and determines, using the validity determination information, validity of the content recorded on the cloud server device. It should be noted that the video recording management system may include a video recording device which is primary device 10 and a management server device which is management server 40. In other words, the video recording management system includes: a video recording device that records the content on the cloud server device; and a management server device connected to the video recording device via the Internet. In this case, the circuit and the at least one memory are each included in the video recording device or the management server device. Furthermore, the validity determination information is information indicating at least one of a checksum for management information on the content, a hash value for the management information on the content, or a dubbing count of the content.

Here, as described in PTL 1 and PTL 2 mentioned above, duplication, tampering, and the like of digital data is very easy as compared with analog data. In addition, in the case where a cloud server device is used as a recording destination of a content being digital data, the cloud server device can be accessed by any device such as a PC. Thus, it is more likely that the illegal use of the content such as duplication occurs. When a content is recorded by a conventional recorder, the content and information pertaining to the protection of the content (a content key, a dubbing count, etc.) are recorded together in a hard disk drive (HDD). In such a scheme, a proprietary file system is used, or a device-bound information is held in an area that cannot be accessed by a user. For example, in SeeQVault (SQV (registered trademark)), a Blu-ray (registered trademark) Disc (BD disc), and the like, information is stored in an area that requires secure access, to prevent illegal COPY. However, in the case where a content is recorded on a cloud server device, the content can be accessed from any PC or the like, and the file can be operated by the PC or the like. Thus, the COPY of the content may be easily created if the content is in the form of a file. In addition, in the case where the cloud server device is a general-purpose cloud server device, it is impossible to make the cloud server device support secure access or the like.

Hence, in the video recording management system in the present embodiment, information pertaining to content protection is managed being linked to a cloud server device in at least one memory mentioned above, which is an area that cannot be accessed by unspecified user, rather than in the cloud server device. The information pertaining to content protection is validity determination information or a content key. Accordingly, the validity determination information linked to the cloud server device (the checksum or hash value for management information, the dubbing count of each show, etc.) and a content key are managed in the video recording management system, in other words, in primary device 10 or management server 40. It is thus possible to implement such a framework in which, if an illegal COPY of a content is created, the COPY is treated as being invalid and cannot be played back. That is, it is possible to implement an appropriate anti-illegal-COPY measure on a cloud service.

It should be noted that the validity determination information may be a flag for determining validity of content.

Furthermore, in the video recording management system according to the present embodiment, when the management information is held and updated by each of the video recording management system and the cloud server device, the circuit determines the validity of the content recorded on the cloud server device by comparing the validity determination information obtainable from the management information on the video recording management system and the validity determination information obtainable from the management information of the cloud server device. Accordingly, the validity determination information in the video recording management system and the validity determination information in the cloud server device are compared. For example, when they are different from each other, the content is determined to be invalid. As a result, it is possible to appropriately determine the validity of the content.

Furthermore, management server 40 according to the present embodiment is a management server device to be used in video recording and playback system 100. Specifically, video recording and playback system includes: a cloud server device which is cloud server 20; a first video recording device which is primary device 10; a terminal device which is secondary device 30; and the management server device which is management server 40. The first video recording device receives and encrypts a content that is distributed, and records the content encrypted, on the cloud server device via Internet. The terminal device plays back the content. The management server device is connected to the first video recording device via Internet. Such a management server device includes: a circuit; and a memory connected to the circuit. The memory holds, in association with the cloud server device, first identification information for identifying the first video recording device. The circuit, when the first video recording device is to be replaced with a second video recording device: replaces the first identification information held by the memory in association with the cloud server device, with second identification information for identifying the second video recording device; and transfers, to the second video recording device, protection information that is used for protecting the content and is held by the first video recording device.

There have been conventional migration functions and dubbing functions between recorders for a recorded show. However, in such migration of a recorded show, the recorded show is present inside an internal HDD of a recorder or a device-bound universal serial bus (USB)-HDD, and thus, the recorded show itself needs to be transferred. If such a conventional method is applied to a cloud recording in which a content is recorded on cloud server 20, the method involves such time and trouble that data on a recorded show is once read from cloud server 20, decrypted, further encrypted for the transmission and reception of the data under DTCP, decrypted again at a migration destination, then encrypted by local encryption, and recorded on an internal HDD or the like. That is, a migration target is the recorded show itself, and the recorded show is recorded in the recorder. Thus, the recorded show itself needs to be transferred. This is very troublesome.

However, when attention is paid to the fact that data (i.e., a recorded show) is present on cloud server 20 in cloud recording, the transfer of the recorded show is not necessarily needed, and it is sufficient to transfer an access privilege to the recorded show on cloud server 20 and information indicating the validity of the data (i.e., protection information).

Therefore, in the case where the first video recording device is replaced with the second video recording device as mentioned above, the management server device in the present embodiment replaces the first identification information on the first video recording device associated with the cloud server device with the second identification information on the second video recording device. In other words, an access privilege to a content on the cloud server device is transferred to the second video recording device. Additionally, the management server device transfers protection information that is being held by the first video recording device to the second video recording device.

Accordingly, it is possible to easily perform the migration of primary device 10, in other words, the migration of a primary device privilege from the first video recording device to the second video recording device while protecting a content adequately and dispensing with time and trouble. In addition, it is considered that such migration is within the scope of private use and does not exceed the reach of personal use. That is, it is possible to implement an appropriate migration of primary device 10.

Furthermore, the circuit of the management server device according to the present embodiment, when the first video recording device is detachable from the video recording and playback system, executes at least one of: (a) deleting the content recorded on the cloud server device by the first video recording device; (b) deleting cloud account information that is for accessing the cloud server device and is held by the first video recording device or the memory; or (c) deleting the first identification information that is held by the memory in association with the cloud account information. For example, in (b), cloud service information L11 or L12 illustrated in FIG. 6 is deleted as cloud account information. Alternatively, in (b), the cloud service ID, URL, cloud account name, and the cloud password in cloud service list L4 illustrated in FIG. 4 or FIG. 5 are deleted as cloud account information. In (c), primary device ID in cloud service list L4 illustrated in FIG. 4 is deleted as first identification information.

Here, also in the case of a conventional recorder, resetting personal information and formatting the HDD are recommended when the recorder is transferred to another person. This alone is insufficient for a recorder that supports cloud recording. In addition to this, inhibition of accessing a recorded show on a cloud service or deletion of a recorded show on a cloud service are needed. If a user forgets these kinds of processing, the processing by a transferred recorder may exceed the scope of personal use.

Hence, in the present embodiment, the deletion of a content recorded on a cloud server device, the deletion (or resetting) of cloud account information, and the like are performed as mentioned above. After cloud account information recorded on the first video recording device or the management server device is deleted (or reset), the first video recording device cannot access the cloud server device. In addition, in the case where cloud service list L4 is managed by the management server device, a smartphone, a PC, or the like logging in to the management server device and deleting an entry in cloud service list L4 makes it possible to prevent the first video recording device from accessing the cloud server device. Therefore, it is possible to sufficiently suppress an illegal access to the cloud server device by the first video recording device that has been transferred, and it is possible to easily implement an appropriate transfer of the first video recording device, in other words, the primary device.

It should be noted that management of information in the present disclosure means holding of such information, and may also mean the changing and deleting of such information.

Furthermore, the protection information according to the present embodiment is information indicating at least one of content key Kc for decrypting the content, a checksum for management information of the content, a hash value for the management information of the content, or a dubbing count of the content. Accordingly, the protection information used for effectively protecting the content is transferred from the first video recording device to the second video recording device. Thus, it is possible to implement an appropriate migration of primary device 10 with an enhanced strength of security.

### (Other aspects, etc.)

Although systems, devices, and so on, according to one or more aspects of the present disclosure have been described based on the foregoing embodiment, the present disclosure is not limited to the foregoing embodiment. Forms obtained by making various modifications to the foregoing embodiment that can be conceived by a skilled person, so long as they do not depart from the essence of the present disclosure, may also be included in the present disclosure.

It should be noted that the following are also included in the present disclosure.
(1) At least one of the devices described above is a computer system configured with, specifically, a microprocessor, a Read Only Memory (ROM), a Random Access Memory (RAM), a hard disk unit, a display unit, a keyboard, a mouse, and so on. The RAM or the hard disk unit stores a computer program. The microprocessor operates according to the computer program, so that the functions of the at least one device is achieved. Here, the computer program includes a combination of instruction codes indicating instructions to be given to the computer so as to achieve a specific function.
(2) Some or all of the elements included in at least one of the devices described above may be realized as a single system large scale integration (LSI). The system LSI is a super multifunctional LSI manufactured by integrating a plurality of elements onto a single chip. To be more specific, the system LSI is a computer system configured with a microprocessor, a ROM, and a RAM, for example. The RAM stores a computer program. The microprocessor operates according to the computer program so that a function of the system LSI is achieved.
(3) Some or all of the elements included in at least one of the devices described above may be implemented as an IC card or a standalone module that can be inserted into and removed from the corresponding device. The IC card or the module is a computer system configured with a microprocessor, a ROM, and a RAM, for example. The IC card or the module may include the aforementioned super multifunctional LSI. The microprocessor operates according to the computer program so that a function of the IC card or the module is achieved. The IC card or the module may be tamper-resistant.
(4) The present disclosure may be the methods described above. Furthermore, the present disclosure may be a computer program for causing a computer to execute each of these methods. Moreover, the present disclosure may be a digital signal of the computer program.

Furthermore, the present disclosure may be the aforementioned computer program or digital signal recorded on a computer-readable recording medium, such as a flexible disk, a hard disk, a Compact Disc (CD)-ROM, a DVD, a DVD-ROM, a DVD-RAM, a Blu-ray (registered trademark) disc (BD), or a semiconductor memory. The present invention may also be the digital signal recorded on such a recording medium.

Furthermore, the present disclosure may be the aforementioned computer program or digital signal transmitted via a telecommunication line, a wireless or wired communication line, a network represented by the Internet, and data broadcasting, and so on.

Furthermore, by transferring the recording medium having the aforementioned program or digital signal recorded thereon or by transferring the aforementioned program or digital signal via the aforementioned network or the like, the present disclosure may be implemented by a different independent computer system.

### [Industrial Applicability]

The present disclosure is applicable to a video recording and playback system that records and plays back content such as a show.

### [Reference Signs List]

- 10: primary device (video recording device)
- 20: cloud server (cloud server device)
- 30, 31, 32, 33: secondary device (terminal device)
- 40: management server
- 41: account manager
- 42: common key manager
- 43: secondary device manager
- 44: cloud service account manager
- 45: primary device manager
- 100: video recording and playback system
- Kp: common key
- Kc: content key
- L1: account list
- L2: account information
- L3: secondary device list
- L4: cloud service list
- L5: primary device list
- L11, L12: cloud service information
- L13: content-related information

## Claims

1. A terminal device to be used in a video recording and playback system,
the video recording and playback system including:
a cloud server device;
a video recording device that receives and encrypts a content that is distributed, and records the content encrypted, on the cloud server device via Internet; and
the terminal device that plays back the content,
the terminal device comprising:
a circuit; and
a memory connected to the circuit, wherein
using the memory, the circuit:
performs device authentication with the video recording device;
obtains a content key that is encrypted from the video recording device;
decrypts the content key using a common key shared between the video recording device and the terminal device;
reads the content that is encrypted and recorded on the cloud server device, by accessing the cloud server device without passing through the video recording device; and
decrypts the content read using the content key to play back the content.

2. The terminal device according to claim 1, wherein
the circuit performs device authentication with the video recording device via a management server device to obtain the common key to be transmitted from the management server device to the terminal device and the video recording device.

3. A video recording management system to be used in a video recording and playback system,
the video recording and playback system including:
a cloud server device;
the video recording management system that receives and encrypts a content that is distributed, and records the content encrypted, on the cloud server device via Internet; and
a terminal device that plays back the content,
the video recording management system comprising:
a circuit; and
at least one memory, wherein
the at least one memory holds, in association with the cloud server device, validity determination information and a content key, and
the circuit:
reads the content key from the at least one memory, and uses the content key in encrypting the content; and
reads the validity determination information from the at least one memory, and determines, using the validity determination information, validity of the content recorded on the cloud server device.

4. The video recording management system according to claim 3, comprising:
a video recording device that records the content on the cloud server device; and
a management server device connected to the video recording device via the Internet, wherein
the circuit and the at least one memory are each included in the video recording device or the management server device.

5. The video recording management system according to claim 3 or 4, wherein
the validity determination information is information indicating at least one of a checksum for management information on the content, a hash value for the management information on the content, or a dubbing count of the content.

6. The video recording management system according to claim 5, wherein
when the management information is held and updated by each of the video recording management system and the cloud server device,
the circuit determines the validity of the content recorded on the cloud server device by comparing the validity determination information obtainable from the management information on the video recording management system and the validity determination information obtainable from the management information of the cloud server device.

7. A management server device to be used in a video recording and playback system,
the video recording and playback system including:
a cloud server device;
a first video recording device that receives and encrypts a content that is distributed, and records the content encrypted, on the cloud server device via Internet;
a terminal device that plays back the content; and
the management server device that is connected to the first video recording device via Internet,
the management server device comprising:
a circuit; and
a memory connected to the circuit, wherein
the memory holds, in association with the cloud server device, first identification information for identifying the first video recording device, and
the circuit,
when the first video recording device is to be replaced with a second video recording device:
replaces the first identification information held by the memory in association with the cloud server device, with second identification information for identifying the second video recording device; and
transfers, to the second video recording device, protection information that is used for protecting the content and is held by the first video recording device.

8. The management server device according to claim 7, wherein
the circuit,
when the first video recording device is detachable from the video recording and playback system, executes at least one of:
(a) deleting the content recorded on the cloud server device by the first video recording device;
(b) deleting cloud account information that is for accessing the cloud server device and is held by the first video recording device or the memory; or
(c) deleting the first identification information that is held by the memory in association with the cloud account information.

9. The management server device according to claim 8, wherein
the protection information is information indicating at least one of a content key for decrypting the content, a checksum for management information of the content, a hash value for the management information of the content, or a dubbing count of the content.

10. A control method performed by a terminal device to be used in a video recording and playback system,
the video recording and playback system including:
a cloud server device;
a video recording device that receives and encrypts a content that is distributed, and records the content encrypted, on the cloud server device via Internet; and
the terminal device that plays back the content,
the control method comprising:
performing device authentication with the video recording device;
obtaining a content key that is encrypted from the video recording device;
decrypting the content key using a common key shared between the video recording device and the terminal device;
reading the content that is encrypted and recorded on the cloud server device, by accessing the cloud server device without passing through the video recording device; and
decrypting the content read using the content key to play back the content.

11. A control method performed by a video recording management system to be used in a video recording and playback system,
the video recording and playback system including:
a cloud server device;
the video recording management system that receives and encrypts a content that is distributed, and records the content encrypted, on the cloud server device via Internet; and
a terminal device that plays back the content,
the control method comprising:
holding, in association with the cloud server device, validity determination information and a content key;
reading the content key from a memory, and using the content key in encrypting the content; and
reading the validity determination information from the memory, and determining, using the validity determination information, validity of the content recorded on the cloud server device.

12. A control method performed by a management server device to be used in a video recording and playback system,
the video recording and playback system including:
a cloud server device;
a first video recording device that receives and encrypts a content that is distributed, and records the content encrypted, on the cloud server device via Internet;
a terminal device that plays back the content; and
the management server device that is connected to the first video recording device via Internet,
the control method comprising:
holding, in association with the cloud server device, first identification information for identifying the first video recording device; and
when the first video recording device is to be replaced with a second video recording device:
replacing the first identification information held by a memory in association with the cloud server device, with second identification information for identifying the second video recording device; and
transferring, to the second video recording device, protection information that is used for protecting the content and is held by the first video recording device.

13. A program for a terminal device to be used in a video recording and playback system,
the video recording and playback system including:
a cloud server device;
a video recording device that receives and encrypts a content that is distributed, and records the content encrypted, on the cloud server device via Internet; and
the terminal device that plays back the content,
the program causing a computer of the terminal device to execute:
performing device authentication with the video recording device;
obtaining a content key that is encrypted from the video recording device;
decrypting the content key using a common key shared between the video recording device and the terminal device;
reading the content that is encrypted and recorded on the cloud server device, by accessing the cloud server device without passing through the video recording device; and
decrypting the content read using the content key to play back the content.

14. A program for a video recording management system to be used in a video recording and playback system,
the video recording and playback system including:
a cloud server device;
the video recording management system that receives and encrypts a content that is distributed, and records the content encrypted, on the cloud server device via Internet; and
a terminal device that plays back the content,
the program causing a computer of the video recording management system to execute:
holding, in association with the cloud server device, validity determination information and a content key;
reading the content key from a memory, and using the content key in encrypting the content; and
reading the validity determination information from the memory, and determining, using the validity determination information, validity of the content recorded on the cloud server device.

15. A program for a management server device to be used in a video recording and playback system,
the video recording and playback system including:
a cloud server device;
a first video recording device that receives and encrypts a content that is distributed, and records the content encrypted, on the cloud server device via Internet;
a terminal device that plays back the content; and
the management server device that is connected to the first video recording device via Internet,
the program causing a computer of the management server device to execute:
holding, in association with the cloud server device, first identification information for identifying the first video recording device; and
when the first video recording device is to be replaced with a second video recording device:
replacing the first identification information held by a memory in association with the cloud server device, with second identification information for identifying the second video recording device; and
transferring, to the second video recording device, protection information that is used for protecting the content and is held by the first video recording device.
